Europäisches Patentamt

(19) European Patent Office

Office européen des brevets

(11) **EP 1 244 880 B1**

(12) **EUROPÄISCHE PATENTSCHRIFT**

(45) Veröffentlichungstag und Bekanntmachung des Hinweises auf die Patenterteilung:
**11.08.2004  Patentblatt 2004/33**

(51) Int Cl.[7]: **F16H 1/28**, F16F 15/124, B25J 9/10, E05F 11/48

(21) Anmeldenummer: **00987439.7**

(22) Anmeldetag: **22.12.2000**

(86) Internationale Anmeldenummer:
**PCT/EP2000/013142**

(87) Internationale Veröffentlichungsnummer:
**WO 2001/048397 (05.07.2001 Gazette 2001/27)**

(54) **VERSTELLVORRICHTUNG MIT PLANETENGETRIEBE**

ADJUSTING DEVICE WITH PLANETARY GEARS

DISPOSITIF D'AJUSTEMENT A TRAIN D'ENGRENAGE PLANETAIRE

(84) Benannte Vertragsstaaten:
**AT BE CH CY DE DK ES FI FR GB GR IE IT LI LU MC NL PT SE TR**

(30) Priorität: **28.12.1999  DE 19963486**
**27.01.2000  DE 10003350**
**28.04.2000  DE 10020901**
**27.06.2000  DE 10030321**
**19.12.2000  DE 10063467**

(43) Veröffentlichungstag der Anmeldung:
**02.10.2002  Patentblatt 2002/40**

(60) Teilanmeldung:
**03023051.0 / 1 429 048**

(73) Patentinhaber: **Diro Konstruktions GmbH & Co. KG**
**38471 Rühen-Brechtorf (DE)**

(72) Erfinder: **TOMCZYK, Hubert**
**40237 Düsseldorf (DE)**

(74) Vertreter: **Gramm, Werner, Prof. Dipl.-Ing. et al**
**GRAMM, LINS & PARTNER**
**Theodor-Heuss-Strasse 1**
**38122 Braunschweig (DE)**

(56) Entgegenhaltungen:
| | |
|---|---|
| **WO-A-00/63588** | **WO-A-81/00899** |
| **DE-A- 2 130 694** | **DE-A- 2 541 952** |
| **DE-A- 3 201 309** | **DE-A- 19 729 263** |
| **DE-A- 19 944 915** | **GB-A- 1 390 316** |
| **US-A- 2 019 343** | **US-A- 3 108 498** |
| **US-A- 3 307 433** | **US-A- 4 301 693** |
| **US-A- 4 841 812** | **US-A- 4 864 893** |
| **US-A- 4 882 943** | **US-A- 5 293 107** |
| **US-A- 5 409 431** | **US-A- 5 462 498** |
| **US-A- 5 704 870** | **US-A- 5 807 202** |
| **US-A- 5 993 348** | |

**Beschreibung**

Die Erfindung bezieht auf eine Verstellvorrichtung zum Verstellen eines zweiten Teiles gegenüber einem ersten Teil. Derartige Verstellvorrichtungen werden insbesondere zum Verstellen von Gelenkteilen wie zum Beispiel Robotergelenkteilen, einer Sitzlehne, einer Seiltrommel eines Seilzuges oder als Untersetzungsgetriebe zum Beispiel von Turbinen verwendet.

Bei der Verstellung eines Gelenkteiles gegenüber einem anderen Gelenkteil, insbesondere von Gelenkteilen an einem Roboterarm, ist insbesondere eine gute Positionierbarkeit und drehmomentfeste Bewegung der Gelenkteile zueinander erforderlich. Hierzu werden derzeit unter anderem Schrittmotoren eingesetzt, die eine exakte Verstellbarkeit der Gelenkteile zueinander gewährleisten, oder zum Beispiel Elektromotoren mit einer hohen Untersetzung.

Bei Verwendung von Motoren, wie zum Beispiel Elektromotoren, mit höheren Drehzahlen kann die erforderliche hohe Untersetzung beispielsweise durch Getriebe mit elastischem Zahnkranz (Harmonic-Drive-Getriebe) verwirklicht werden. Bei diesen als Getriebe wirkenden Verstellungsvorrichtungen sind zwei innenverzahnte Zahnräder mit unterschiedlicher Zähnezahl und ein in den innenverzahnten Zahnrädern vorgesehenes außenverzahntes, elastisches Zahnrad vorgesehen, das eine nicht runde, zum Beispiel elliptische Form aufweist und beim Drehen so verformt wird, dass seine Außenzähne nacheinander in die Zahnlücken der innenverzahnten Zahnräder eingedrückt werden, wodurch eine relative Winkelverstellung erreicht wird, bei der die Zähne des außenverzahnten elastischen Zahnrades ständig im Eingriff mit den Innenverzahnungen sind. Der Unterschied der Zähnezahlen der innenverzahnten Zahnräder beträgt dabei $\geq 2$. Zum Erreichen großer Untersetzungen sind große Zähnezahlen notwendig, wozu hochelastische, teure und reibungsbeständige Materialien benötigt werden.

Sitzlehnenverstellvorrichtungen werden insbesondere für Kraftfahrzeugsitze verwendet, um die Sitzlehnenneigung in einer von dem Benutzer ausgewählten Position einstellen zu können. Für derartige Sitzlehnenverstellvorrichtungen sind insbesondere Drehverstellungen mit Exzenterantrieb bekannt. Hierbei ist ein außenverzahntes Zahnrad mit kleinerem Durchmesser und kleinerer Zähnezahl in einem innenverzahnten Zahnrad mit größerem Durchmesser und größerer Zähnezahl angebracht, wobei das außenverzahnte Zahnrad mit Hilfe einer Exzenterachse ständig mit dem größeren, äußeren Zahnrad fest verzahnt bleibt und bei Drehung der Exzenterachse zu einer relativen Winkelverstellung führt.

Derartige Sitzlehnenverstellvorrichtungen mit Exzenterantrieb erlauben im allgemeinen lediglich eine Bedienung mit relativ hohen Drehmomenten. Weiterhin wird bei der Sitzlehnenverstellung die Sitzlehne nicht nur gedreht oder geklappt, sondern aufgrund des exzentrischen Antriebes in einer Taumelbewegung geführt.

Die DE 197 29 562 A1 zeigt eine Sitzlehnenverstellung für einen Kraftfahrzeugsitz, bei der die Verstellung der Lehne durch exzentrisches Verdrehen eines Zahnrades in einem Zahnkranz durch Verschieben eines Keilpaares in einem von einem Gleitlager gebildeten Spalt erfolgt. Zur Verringerung der erforderlichen Verstelldrehmomente sind die Gleitflächen mit einem Gleitlack und einem eine plastische Verformung der Gleitflächen bewirkenden Additiv versehen.

Durch eine derartige Schmierung kann zwar eine gewisse Verringerung von Reibungskräften und dadurch des erforderlichen Drehmomentes erreicht werden, der hierbei erzielte Aufwand ist jedoch erheblich und führt zu hohen Fertigungskosten. Weiterhin ist eine entsprechend aufwendige Abdichtung der geschmierten Gleitflächen gegenüber Staub und Feuchtigkeit notwendig. Auch bei guter Schmierung sind weiterhin relativ hohe Drehmomente notwendig, wobei ebenfalls eine exzentrische Verstellung der Sitzlehne entlang einer Taumelbahn erfolgt.

Seilzugverstellvorrichtungen ermöglichen ein stufenloses Öffnen und Schließen zum Beispiel einer Fensterscheibe oder eines Schiebedachs eines Kraftfahrzeugs. Hierfür sind insbesondere Lösungen mit Schneckengetrieben bekannt. Ein Schneckengetriebe ermöglicht eine hohe Drehzahlreduktion, so dass schnelllaufende, klein bauende Elektromotoren verwendet werden können. Aufgrund des Selbsthemmungseffektes des Schneckengetriebes kann eine Verstellung des eingestellten Seilzuges bei ausgeschaltetem Motor wirksam verhindert werden. Schneckengetriebe weisen weiterhin den Vorteil auf, dass eine hohe Untersetzung mit nur einer Stufe ermöglicht wird, so dass allzu aufwendige, mehrstufige Getriebekonstruktionen nicht erforderlich sind.

Nachteilig an Schneckengetrieben ist jedoch die relativ große Reibung bei einem relativ niedrigen Wirkungsgrad von zum Beispiel 60 %. Hierdurch wird ein Elektromotor mit einer größeren Leistung und die Verwendung von reibungsbeständigen, teuren Materialien für das Schneckenrad erforderlich. Bei hohen Belastungen und hohen Außentemperaturen kann zudem eine große Wärmebelastung des Materials des Schneckenrades auftreten, so dass als Material insbesondere abriebfeste und wärmebeständige Kunststoffe verwendet werden, die dementsprechend kostenaufwendig sind.

Aus der DE 32 01 309 A1 ist eine gattungsgemäße Verstellvorrichtung mit zwei innenverzahnten Belaglaschen mit gleichen Wälzkreisen und unterschiedlichen Zähnezahlen bekannt, wobei einige Planetenräder, die von einem Sonnenrad angetrieben werden, beide Innenverzahnungen kämmen.

Der Erfindung liegt die Aufgabe zugrunde, gegenüber dem Stand der Technik Verbesserung zu schaffen und insbesondere eine Verstellvorrichtung zu schaffen, die mit relativ geringem Aufwand eine genaue und dauerhafte Positionierbarkeit gewährleistet. Hierbei soll vorzugsweise eine feste Klemmung oder Selbstblockade der Teile bei einer hohen Untersetzung und möglichst geringer Reibung gewährleistet sein. Die erfindungsgemäße Verstellvorrichtung soll vorzugsweise mit einfachen Materialien und mit einer einfachen und kostengünstigen Herstellung verwirklicht werden können und eine kleine Dimensionierung und geringe Masse ermöglichen.

Diese Aufgabe wird durch eine Verstellvorrichtung mit den Merkmalen des Anspruchs 1 gelöst. Die Unteransprüche beschreiben bevorzugte Ausführungsformen.

Der Erfindung liegt der Gedanke zugrunde, zwei miteinander gekoppelte Zahnradsysteme zu schaffen, wobei jedes Zahnradsystem jeweils ein Verstellzahnrad mit Innenverzahnung oder Kegelverzahnung und hierin umlaufende Umlaufzahnräder aufweist, wobei zwischen den Systemen ein Unterschied in den Zähnezahlen vorliegt. Dies kann sowohl mit einem Zahnradsystem mit Innen- und Außenzahnrädern als auch in einem Zahnradsystem mit Kegelverzahnungen verwirklicht werden.

Bei den Ausführungsformen mit Innen- und Außenzahnrädern wird eine relative Verstellung der Verstellzahnräder mit Innenverzahnungen erreicht, indem diese über gemeinsame Umlaufzahnräder verbunden sind, die von einer Antriebswelle angetrieben werden. Die Umlaufzahnräder weisen hierbei axial voneinander getrennte Bereiche auf, von denen jeweils ein Bereich mit einem der beiden Verstellzahnräder mit innenverzahnung im Eingriff ist. Indem nunmehr die Zähnezahlen der Innenverzahnungen und/oder die Zähnezahlen der axial voneinander getrennten Außenverzahnungen beziehungsweise Außenverzahnungsbereiche jedes Umlaufzahnrades verschieden sind, weisen das aus der ersten Innenverzahnung und dem ersten Außenverzahnungsbereich gebildete erste Innenradpaarsystem und das aus der zweiten Innenverzahnung und dem zweiten Außenverzahnungsbereich gebildete zweite Innenradsystem unterschiedliche Übersetzungen auf. Da auf jedem der Umlaufzahnräder ein erster Außenverzahnungsbereich und zweiter Außenverzahnungsbereich starr miteinander gekoppelt sind, werden die Verstellzahnräder mit Innenverzahnung zu einer Relatiwerdrehung gezwungen.

Indem der Unterschied der Zähnezahlen der Innenverzahnungen beziehungsweise der Außenverzahnungsbereiche im Verhältnis zu den Zähnezahlen relativ gering gewählt wird, kann bei einer größeren Drehbewegung der Welle aufgrund des relativ geringen Zähnezahlunterschiedes eine sehr geringe Verdrehung der Verstellzahnräder zueinander erreicht werden, was zu einer hohen Untersetzung führt. Somit können als Antrieb schnelllaufende Motoren mit geringem Drehmoment verwendet werden, wobei aufgrund der hohen Untersetzung eine kleine, genau positionierbare Verdrehung mit relativ hohem Drehmoment erreicht werden kann.

Somit kann mit wenigen, kostengünstig herstellbaren Teilen (im Wesentlichen Zähnrädern mit Innenverzahnung beziehungsweise Außenverzahnung) eine leichtgängige, kleine Verstellvorrichtung mit geringer Masse verwirklicht werden, die dennoch robust ist, große Drehmomente übertragen kann und eine präzise Positionsverstellung gewährleistet, in jeder Position fest klemmt und eine geringe Reibung aufweist. Die Verstellvorrichtung ist hierbei leicht zu montieren und einfach zu handhaben.

Die Verstellvorrichtung kann hierbei auf unterschiedliche Weise eingesetzt werden. Beispiele sind unter anderem eine manuell betätigbare Verstellvorrichtung für zum Beispiel eine Sitzlehnenverstellung. Hierbei wird erfindungsgemäß keine exzentrische Verstellung der Sitzlehne entlang einer Taumelbahn, sondern eine Verdrehung um die Achse der Welle erreicht, so dass eine gute, genaue und bequeme Positionierung der Sitzlehne möglich ist, ohne dass nachfolgend die Position des Sitzes in vertikaler oder horizontaler Richtung erneut korrigiert werden muss. Weiterhin steigt die Festigkeit von der Konstruktion bei Verwendung von mehreren Umlaufzahnrädern, so dass die Sitzlehne hohe Kräfte übertragen kann. Somit können hohe Kräfte beziehungsweise Drehmomente aufgenommen werden, zum Beispiel bei Unfallaufprällen oder zur Befestigung von Sicherheitsgurten an der Sitzlehne.

Vorteilhafterweise hat hierbei das an der Sitzlehne befestigbare zweite Verstellzahnrad eine kleinere Zähnezahl als das an dem Sitzunterbau befestigbare erste Verstellzahnrad, da hierbei die Drehrichtung der Welle der Drehrichtung der Sitzlehne entspricht, was zu einer höheren Benutzerfreundlichkeit führt. Es ist jedoch ein umgekehrter Aufbau möglich, bei dem das Verstellzahnrad mit kleinerer Zähnezahl am Sitzunterbau befestigt ist, wodurch eine gegenläufige Betätigung der Welle erfolgt.

Weiterhin können erfindungsgemäß als Antrieb Motoren, insbesondere Elektromotoren, verwendet werden. Aufgrund der hohen Untersetzung können hierbei kostengünstige Motoren mit hohen Drehzahlen verwendet werden. Hiermit können unter anderem Seilzugverstellungen angetrieben werden; weiterhin können Robotergelenke verwirklicht werden, bei dem vorteilhafterweise die Motoren und/oder Verstellvorrichtungen in den Gelenkteilen beziehungsweise Roboterarmteilen untergebracht werden können. Aufgrund der geringen Masse der erfindungsgemäßen Verstellvorrichtung und der geringen Masse der verwendbaren, schnelllaufenden Motoren können Robotergelenke mit geringer Masse hergestellt werden, die bei kleineren Robotern größere Lasten bewegen können.

Damit die erste und zweite Außenverzahnung der Umlaufräder jeweils passend in der ersten beziehungsweise zweiten innenverzahnung im Eingriff sind, ist zumindest bei einem der Umlaufzahnräder ein Winkelversatz zwischen den beiden Außenverzahnungsbereichen vorteilhaft. Um die Positionsgenauigkeit weiter zu erhöhen, ist es vorteilhaft, eine schräge oder etwas kegelige Verzahnung zu verwenden.

Erfindungsgemäß können vorteilhafterweise Umlaufzahnräder mit drei oder mehr Außenverzahnungsbereichen verwendet werden. In diesem Fall sind der erste und zweite Außenverzahnungsbereich jeweils in Eingriff mit der ersten beziehungsweise zweiten Innenverzahnung der entsprechenden Verstellzahnräder, und ein dritter Außenverzahnungsbereich ist im Eingriff mit der als Sonnenrad wirkenden. Wellenaußenverzahnung. Auch in diesem Fall sind die mindestens drei Außenverzahnungsbereiche jedes Umlaufzahnrades starr miteinander gekoppelt. Vorzugsweise sind sie aus drei beziehungsweise mehr nebeneinander gesetzten, an axialen Flächen miteinander verbundenen Einzelzahnrädern hergestellt. Durch die Verwendung eines dritten Außenverzahnungsbereiches kann ein gewünschtes Übersetzungsverhältnis zwischen der Welle und den Umlaufzahnrädern hergestellt werden, da dieses Übersetzungsverhältnis durch die Zähnezahlen der Wellenaußenverzahnung und der dritten Außenverzahnungsbereiche eingestellt werden kann, ohne dass hierdurch die Zähnezahlen der ersten und zweiten Außenverzahnungsbereiche festgelegt werden. Somit kann auch ein gewünschter Unterschied in den Zähnezahlen der Innenverzahnungen beziehungsweise der ersten und zweiten Außenverzahnungsbereiche unabhängig von der Einstellung des Übersetzungsverhältnisses zwischen Welle und Umlaufzahnrädern eingestellt werden.

Der dritte Außenverzahnungsbereich kann vorteilhafterweise in der Mitte zwischen den ersten und zweiten Außenverzahnungsbereichen angeordnet sein. Alternativ hierzu können mindestens zwei dritte Außenverzahnungsbereiche vorgesehen werden, die den ersten Außenverzahnungsbereich und den zweiten Außenverzahnungsbereich zwischen sich aufnehmen, sodass eine gleichmäßige Aufnahme des Antriebsdrehmomentes von der Antriebswelle möglich ist. Bei Verwendung von zwei dritten Außenverzahnungsbereichen sind diese jeweils mit der Wellenaußenverzahnung in Eingriff. Hierzu kann die Wellenaußenverzahnung in mehrere versetzte Bereiche unterteilt sein.

Für die Ausbildung eines gewünschten Zähnezahlverhältnisses zwischen dem dritten Außenverzahnungsbereich und der Wellenaußenverzahnung kann der dritte Außenverzahnungsbereich mit einem größeren oder kleineren Radius als die ersten und zweiten Außenverzahnungsbereiche ausgebildet werden. Somit kann ein weiter Bereich von gewünschten Untersetzungsverhältnissen der erfindungsgemäßen Verstellvorrichtung annähernd kontinuierlich durch Einstellung der Zähnezahlverhältnisse zwischen Wellenaußenverzahnung und drittem Außenverzahnungsbereich, sowie den Zähnezahlunterschieden zwischen der ersten Innenverzahnung und zweiten Innenverzahnung und/oder der ersten Außenverzahnung und zweiten Außenverzahnung eingestellt werden.

Aufgrund der ungleichmäßigen Belastung der verschiedenen Außenverzahnungsbereiche entstehen Drehmomente senkrecht zu den Achsen der Umlaufzahnräder, die in Richtung auf eine Verkippung der Umlaufzahnräder wirken. Weiterhin wirken bei hohen Umlaufgeschwindigkeiten Fliehkräfte auf die Umlaufzahnräder, die diese in die Verstellzahnräder drücken können. Um diese Drehmomente und Fliehkräfte abzufangen, ist es vorteilhaft, die Umlaufzahnräder in einem festem Käfig beziehungsweise mehreren festen Käfigen zu lagern. Die Käfige erfassen die Umlaufzahnräder zum Beispiel an den Axialflächen.

Es können anstelle von Käfigen jedoch auch gesonderte Laufflächen auf den Arbeitsteilungsdurchmessem an den axialen Seitenbereichen der Umlaufzahnräder und der Verstellzahnräder vorgesehen werden. Diese Laufflächen ermöglichen eine radiale Abstützung der Umlaufzahnräder an den Verstellzahnrädern, wodurch Verkippungen aufgrund der ungleichmäßigen Belastung und die radialen Fliehkräfte abgefangen werden. Die Laufflächen rollen hierbei aneinander ab.

Die Umlaufzahnräder können aus zwei beziehungsweise drei oder mehr miteinander axial verbundenen Einzelrädern hergestellt werden. Die Einzelräder können miteinander verkeilt, verschweißt, verklebt oder mittels Schrauben verbunden werden. Weiterhin ist eine einteilige Ausbildung eines Umlaufzahnrades als Spritzgussteil möglich. Die Verstellzahnräder können zum Beispiel als Blechstanzteile, Blechpressteile oder Spritzgussteile ausgeführt werden.

Indem eines der Verstellzahnräder gehäusefest angebracht ist und das andere Verstellzahnrad mit einer Abtriebswelle verbunden ist, kann ein Getriebe mit hoher Untersetzung verwirklicht werden. Bei Verwendung von Umlaufrädern mit gleichen Zähnezahlen und Innenverzahnungen mit unterschiedlichen Zähnezahlen kann ein Getriebe ohne Drehrichtungsumkehr verwirklicht werden, indem das Verstellzahnrad mit der Innenverzahnung mit geringerer Zähnezahl gehäusefest angebracht wird, so dass durch die Relativverdrehung der Antriebswelle zu dem Gehäuse eine Verdrehung des zweiten Verstellzahnrades gegenüber dem Gehäuse mit gleicher Drehrichtung bewirkt wird.

Die Umlaufzahnräder und gegebenenfalls das Antriebszahnrad können von einem Führungsrad mit entsprechenden Ausnehmungen, das auf die Welle gesteckt ist, aufgenommen werden. Das Führungsrad kann hierbei an seiner radialen Außenfläche an einer oder beiden Innenverzahnungen abgleiten, wodurch eine gute, zuverlässige und einfache Lagerung der Achse und der Umlaufzahnräder erreicht wird. Dieses Führungsrad kann ebenfalls als Pressteil oder Stanzteil, insbesondere als Blechpressteil, ausgeführt werden.

Die Verstellzahnräder können vorteilhafterweise als tiefgepresste Zahnräder ausgeführt werden, bei denen der innere Bereich nicht ausgestanzt, sondern lediglich in axialer Richtung tiefgepresst ist, so dass sich eine einfache, dichte axiale Abdeckung des Verstellzahnrades ergibt.

Zusätzlich können axiale Abdeckungen, zum Beispiel ebenfalls durch Pressteile oder Stanzteile vorgesehen werden.

Erfindungsgemäß kann vorteilhafterweise eine Drehbewegung anstelle oder zusätzlich zu der Drehbewegung der Welle direkt über die Achsen der Umlaufzahnräder erreicht werden. Hierbei kann zum Beispiel ein Antriebsrad in Löcher der Umlaufzahnräder eingreifen und somit eine direkte Verstellung der Umlaufzahnräder in den Verstellzahnrädern erreichen. Somit kann eine Grobverstellung ohne Untersetzung erreicht werden, die für eine schnellere Verstellung durch die bedienende Person hilfreich ist. Die Feineinstellung kann anschließend über die Welle in der oben beschriebenen Weise mit geringem Krafteinsatz beziehungsweise Drehmoment erfolgen. Erfindungsgemäß ist eine Umstellung zwischen der Grobverstellung und der Feinverstellung zum Beispiel durch einen gemeinsamen Drehknopf, der ausgezogen oder eingedrückt wird, und hierbei entweder in die Welle eingreift oder in das Antriebsrad eingreift, möglich.

Zur feineren Übersetzung kann das Antriebsrad für die Grobverstellung von außerhalb über ein außenstehendes Zahnrad und eine Rätsche betätigt werden. Eine derartige Ausbildung ist im allgemeinen jedoch nicht notwendig, da erfindungsgemäß bereits durch die Betätigung der Welle eine hinreichende Untersetzung erreicht wird.

Ein weicher Anlauf und ein weiches Stoppen einer Seilzugverstellvorrichtung kann durch einen Stoßdämpferring gewährleistet werden, der zwischen dem ersten Innenzahnrad und einer gehäuseseitigen Befestigung, zum Beispiel einer gehäuseseitigen Abschlussscheibe angeordnet ist. Dieser Stoßdämpferring kann zum Beispiel Stoßdämpferelemente wie zum Beispiel Gummiklötze aufweisen, die zwischen Vorsprüngen des ersten Innenzahnrades und der gehäuseseitigen Abschlussscheibe derartig angebracht sind, dass eine elastische und/oder dämpfende Verbindung zwischen dem ersten Innenzahnrad und der gehäuseseitigen Abschlussscheibe erreicht wird. Hierbei kann gleichzeitig eine Dichtwirkung mit Hilfe eines einteilig mit Gummiklötzen ausgebildeten Dichtringes erreicht werden.

Die erfindungsgemäße Verstellvorrichtung gemäß allen Ausführungsformen kann insbesondere ohne besondere Schmierung auskommen; es ist jedoch eine zusätzliche Schmierung grundsätzlich möglich.

Die Erfindung wird im Folgenden anhand der beiliegenden Zeichnungen an einigen Ausführungsformen näher erläutert. Es zeigen:

Fig. 1 eine Explosionsdarstellung einer erfindungsgemäßen Verstellvorrichtung gemäß einer ersten Ausführungsform der Erfindung;

Fig. 2a eine erfindungsgemäße Verstellvorrichtung gemäß einer weiteren Ausführungsform im Axialschnitt;

Fig. 2b, c Radialschnitte der Verstellvorrichtung aus Fig. 2a entlang der Schnittlinien A beziehungsweise B;

Fig. 3 Detailvergrößerungen aus Fig. 2b;

Fig. 4a eine Verstellvorrichtung gemäß einer weiteren Ausführungsform der Erfindung im Axialschnitt;

Fig. 4b, c Radialschnitte der Verstellvorrichtung aus Fig. 4a entlang der Schnittlinien C beziehungsweise D;

Fig. 5 eine Verstellvorrichtung gemäß einer weiteren Ausführungsform der Erfindung im Axialschnitt;

Fig. 6 eine Verstellvorrichtung gemäß einer weiteren Ausführungsform der Erfindung im Axialschnitt;

Fig. 7 eine Explosionsdarstellung einer Verstellvorrichtung zur Erläuterung der Erfindung;

Fig. 8 eine Darstellung der Ausführungsform von Fig. 7 im Axialschnitt;

Fig. 9 eine perspektivische Darstellung der Ausführungsform von Fig. 7;

Fig. 10 einen Radialschnitt durch die Ausführungsform von Fig. 7;

Fig. 11 eine schematische Darstellung eines Axialschnitts einer VerstellVorrichtung zur Erläuterung der Erfindung;

Fig. 12 a, b einen Radialschnitt und eine perspektivische Ansicht einer Antriebseinheit mit einer Verstellvorrichtung und einem Elektromotor;

Fig. 13 ein Blockschaltbild zu den Ausführungsformen der Fig. 7 bis 11;

Fig. 14 eine weitere, gegenüber Fig.7 abgewandelte Ausführungsform;

Fig. 15 einen in axialer Richtung auseinandergezogenen Aufbau einer Sitzlehnenverstellvorrichtung gemäß einer Ausführungsform der Erfindung;

Fig. 16    einen in axialer Richtung auseinandergezogenen Aufbau einer Sitzlehnenverstellvorrichtung gemäß einer weiteren Ausführungsform der Erfindung;

Fig. 17    einen in axialer Richtung auseinandergezogenen Aufbau einer weiteren Ausführungsform der Erfindung;

Fig. 18    den zusammengesetzten Aufbau aus Fig. 17;

Fig. 19    den zusammengesetzten Aufbau aus Fig. 16;

Fig. 20    einen in axialer Richtung auseinandergezogenen Aufbau einer Sitzlehnenverstellvorrichtung gemäß einer weiteren Ausführungsform der Erfindung;

Fig. 21    einen zusammengesetzten Aufbau einer Sitzlehnenverstellvorrichtung gemäß einer weiteren Ausführungsform der Erfindung;

Fig. 22    einen zusammengesetzten Aufbau einer Sitzlehnenverstellvorrichtung gemäß einer weiteren Ausführungsform der Erfindung;

Fig. 23    einen in axialer Richtung auseinandergezogenen Aufbau einer weiteren Ausführungsform der Erfindung.

Fig. 24    ein erfindungsgemäßes Robotergelenk mit mehreren erfindungsgemäßen Verstellvorrichtungen im Axialschnitt.

Fig. 25 a-e    eine Vorderansicht (in Axialrichtung), Seitenansicht, Rückansicht, Draufsicht und perspektivische Ansicht einer erfindungsgemäßen Seilzugverstellvorrichtung;

Fig. 26    eine axial auseinandergezogene Darstellung einer Seilzugverstellvorrichtung gemäß einer Ausführungsform der Erfindung;

Fig. 27    Seiten- und Vorderansichten der einzelnen Bestandteile aus Fig. 26.

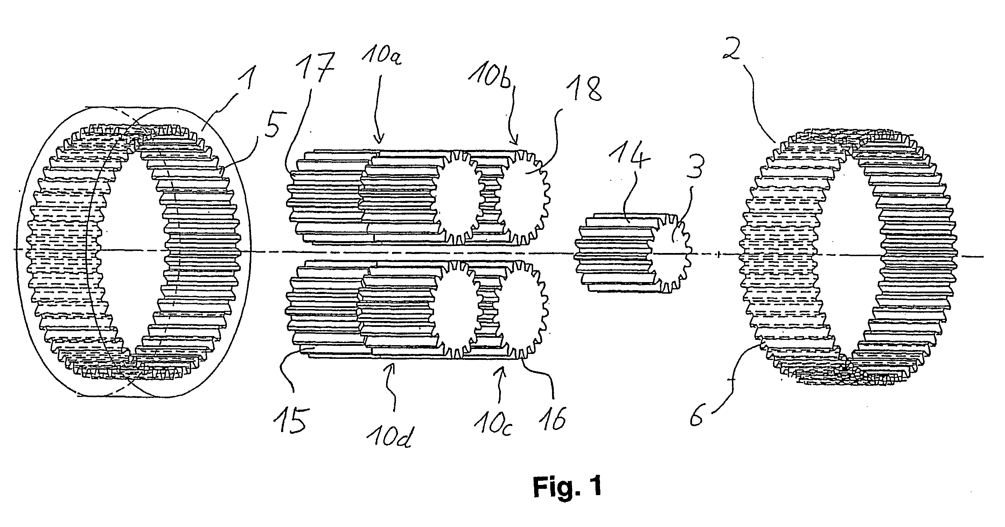

Gemäß Fig. 1 weist eine Verstellvorrichtung gemäß einer ersten Ausführungsform ein erstes Verstellzahnrad 1 mit einer ersten Innenverzahnung 5 und ein in axialer Richtung hierzu versetztes zweites Verstellzahnrad 2 mit einer zweiten Innenverzahnung 6 auf.

Konzentrisch zu den Verstellzahnrädern 1, 2 ist eine Antriebswelle 3 mit einer Wellenaußenverzahnung 14 angeordnet. Um die Achse herum sind Umlaufzahnräder 10 a, 10 b, 10 c und 10 d verteilt angeordnet. Jedes Umlaufzahnrad 10 a bis 10 d ist jeweils aus zwei Einzelzahnrädern 17, 18 gefertigt, die an ihren axialen Stirnflächen miteinander verbunden, zum Beispiel verklebt, verschweißt, verschraubt oder verkeilt sind. Sie können auch als Spritzgussteile miteinander verbunden sein. Somit weist jedes zusammengesetzte Umlaufzahnrad 10 a bis 10 d zwei axial zueinander versetzte, in dieser Ausführungsform direkt aneinander grenzende Außenverzahnungsbereiche auf. Hierbei sind die Umlaufzahnräder derartig in den Verstellzahnrädern 1, 2 angeordnet, dass ein erster Außenverzahnungsbereich 15 jedes Umlaufzahnrades in Eingriff mit der ersten Innenverzahnung 5 ist und somit ein Innenradpaar gebildet wird. Zweite Außenverzahnungsbereiche 16 jedes Umlaufzahnrades sind in Eingriff mit der zweiten Innenverzahnung 6 und bilden somit ein zweites Innenradpaar. Die Wellenaußenverzahnung 14 kann in Eingriff mit entweder den ersten Außenverzahnungsbereichen 15 oder den zweiten Außenverzahnungsbereichen 16 sein.

Erfindungsgemäß unterscheiden sich hierbei entweder die Zähnezahlen der ersten Außenverzahnungsbereiche 15 und der zweiten Außenverzahnungsbereiche 16, und/oder es unterscheiden sich die Zähnezahlen der ersten Innenverzahnung 5 und der zweiten Innenverzahnung 6.

Die Einzelzahnräder 17 und 18, die jeweils zu einem Umlaufzahnrad 10 a bis 10 d zusammengesetzt sind, weisen gleiche Arbeitsteilungsdurchmesser auf. Somit wird eine Kopplung der beiden Innenradpaare über die zusammengesetzten Umlaufzahnräder 10 a bis 10 d erreicht, während die Verstellzahnräder 1, 2 zueinander verdrehbar sind.

Bei der in Fig. 1 gezeigten Ausführungsform unterscheiden sich die Zähnezahlen der ersten Außenzahnungsbereiche 15 und der zweiten Außenverzahnungsbereiche 16. Die Wellenaußenverzahnung 14 - die als Sonnenrad in dem Umlaufgetriebe wirkt, ist in Eingriff mit den zweiten Außenverzahnungsbereichen 16, die wiederum in Eingriff mit der zweiten Innenverzahnung 6 sind.

Hierbei kann zum Beispiel die Wellenaußenverzahnung 16 Zähne, die ersten Außenverzahnungsbereiche jeweils 18 Zähne und die zweiten Außenverzahnungsbereiche jeweils 20 Zähne aufweisen. Die Innenverzahnungen können gleiche Zähnezahlen von zum Beispiel Z=51 aufweisen. Weiterhin ist es möglich, dass die Zähnezahlen der ersten Innenverzahnungen 5, 6 ungleich sind. Hierbei kann zum Beispiel die Zähnezahl der Innenverzahnung 51 betragen und die Zähnezahl der zweiten Innenverzahnung 56 betragen.

Bei Betätigung der Welle 3 führen die Umlaufzahnräder 10 a bis d eine Umlaufbewegung in beiden Verstellzahnrädern durch, wodurch aufgrund der unterschiedlichen Zähnezahlen der Außenverzahnungsbereiche eine Relativverdrehung der Verstellzahnräder zueinander erzwungen wird.

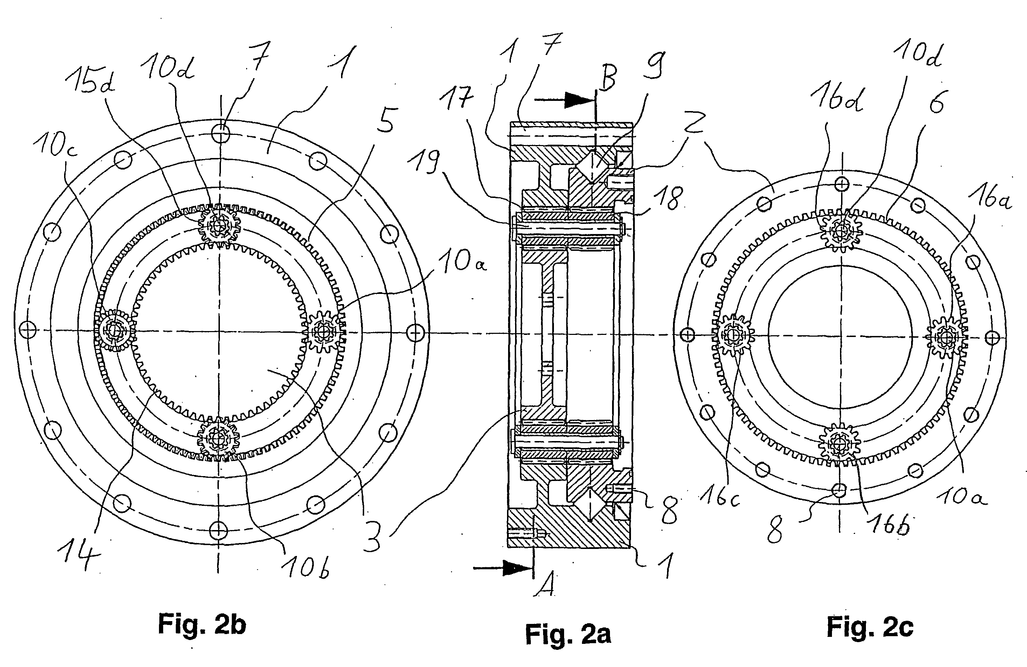

**Fig. 2 a-c** zeigt eine weitere Darstellung, bei der die Verstellzahnräder 1, 2 in axialer Richtung aneinander liegen. Gemäß Fig. 2a kann ein Lager 9 zur Lagerung dieser Verstellzahnräder gegeneinander vorgesehen sein. Die Verstellzahnräder 1, 2 können anders als in Fig. 2a gezeigt auch axial zueinander beabstandet sein, so dass sie nicht in radialer Richtung aneinander gelagert sind.

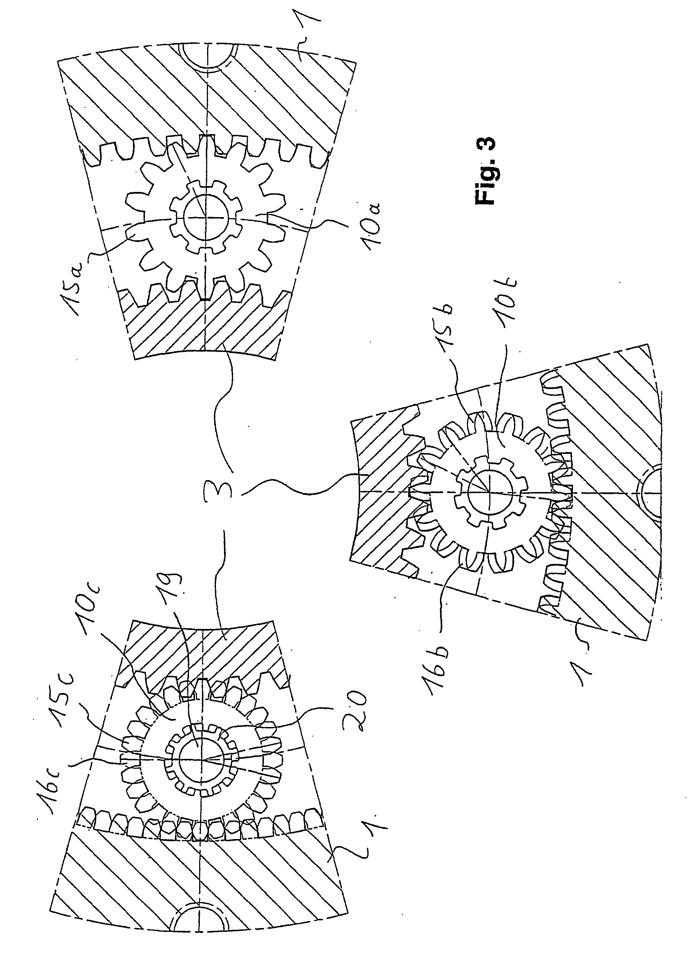

Eine Antriebswelle 3 ist über eine Wellenaußenverzahnung 14 im Eingriff mit Umlaufzahnrädern 10a, 10b, 10c, 10d mit ersten Außenverzahnungsbereiche 15a, 15b, 15c, 15d. Die Antriebswelle 3 kann zum Beispiel durch eine stabförmige Welle mit aufgesetztem Außenzahnrad, oder wie in Fig. 2 gezeigt direkt durch eine angetriebene Hohlwelle mit Außenverzahnung 14 ausgebildet werden. Die Umlaufzahnräder weisen jeweils zwei Einzelzahnräder 17, 18 auf, die axial aneinander liegen oder axial zueinander beabstandet sind. Die erste Außenverzahnung ist jeweils an dem ersten Einzelzahnrad 17 angebracht, und an dem zweiten Einzelzahnrad 18 ist jeweils eine zweite Außenverzahnung 16a, 16b, 16c, 16d vorgesehen, die in Fig. 2c gezeigt ist. Die Außenverzahnungsbereiche 15a - d und 16a - d weisen jeweils gleiche Zähnezahlen m, zum Beispiel m = 14 auf. Wie in Fig. 2b beziehungsweise der Detailvergrößerung der Fig. 3 gezeigt, liegen hierbei nur an dem Umlaufzahnrad 10a die Zähne der Außenverzahnungsbereiche jeweils deckungsgleich aneinander, während bei den anderen Umlaufzahnrädern 10b, 10c, 10d die jeweiligen Außenverzahnungsbereiche zueinander winkelversetzt sind. Bei dem Umlaufzahnrad 10c, das dem Umlaufzahnrad 10a gegenüber liegt, liegen die Zähne der zweiten Außenverzahnung 16c den Zähnen der ersten Außenverzahnung 15c genau um einen halben Zahn versetzt gegenüber. Bei den anderen Umlaufzahnrädern 10b und 10d beträgt der Winkelversatz jeweils den halben Winkelabstand zwischen zwei Zähnen.

Die erste innenverzahnung 5 des ersten Verstellzahnrades 1 weist eine größere Zähnezahl n, zum Beispiel n = 92 wie in Fig. 2 gezeigt, als die zweite Innenverzahnung 6 des zweiten Verstellzahnrades 2 auf. Gemäß Fig. 2 weist diese eine Zähnezahl von n-1, hier n -1 = 91, auf. Der Winkelversatz zwischen den Innenverzahnungen 5, 6 wird bei dem gezeigten Umlaufgetriebe durch den oben beschriebenen Winkelversatz der Einzelzahnräder 17, 18 beziehungsweise der ersten Innenverzahnungen 15a - d und der zweiten Außenverzahnungsbereiche 16a - d kompensiert, so dass gemäß Fig. 2 die Wellenaußenverzahnung 14, die ersten Außenverzahnungsbereiche 10a - 10d und die erste Innenverzahnung 5 ein erstes Zahnradpaar, sowie die zweiten Außenverzahnungsbereiche 16a - 16d und die zweite Innenverzahnung 6 ein zweites Zahnradpaar bilden.

Gemäß Fig. 2a können die Einzelzahnräder 17, 18 durch eine Schraubenverbindung 19 miteinander verbunden sein; es ist weiterhin eine Verbindung mittels einer Verklebung, Vernietung oder Verschweißung möglich. Hierbei sind die Einzelzahnräder 17, 18 jeweils drehfest miteinander verbunden, so dass keine Relativverdrehung dieser Einzelzahnräder zueinander möglich ist. Neben der in Fig. 2 gezeigten Ausbildung mit vier Umlaufzahnrädern ist grundsätzlich auch eine Ausbildung mit zwei, drei oder mehr als vier Umlaufzahnrädern, die jeweils symmetrisch um die Antriebswelle 3 herum verteilt sind, möglich.

Bei Betätigung der Welle 3 führen die Umlaufzahnräder 10 somit eine Umlaufbewegung in beiden Verstellzahnrädern, durch, wodurch aufgrund der unterschiedlichen Zähnezahlen der Innenverzahnungen 5, 6 eine Relativverdrehung der Verstellzahnräder zueinander erzwungen wird. Hierbei rotieren die Umlaufzahnräder um Verstellzahnräder mit Innenverzahnungen mit unterschiedlicher Übersetzung. Bei zum Beispiel einer Innenverzahnung von 92 beziehungsweise 91 Zähnen und einer Außenverzahnung des Antriebsrades von 64 Zähnen wird eine Untersetzung von ca. 222 erreicht. Die Untersetzung kann durch die Zähnezahl der Innenverzahnungen und der Außenverzahnungsbereiche beliebig festgelegt werden. Hierbei können auch unterschiedliche Zähnezahlen der Außenverzahnungsbereiche eingestellt werden, wobei die Zähnezahlen der Innenverzahnungen hierbei gleich oder ebenfalls verschieden sein können.

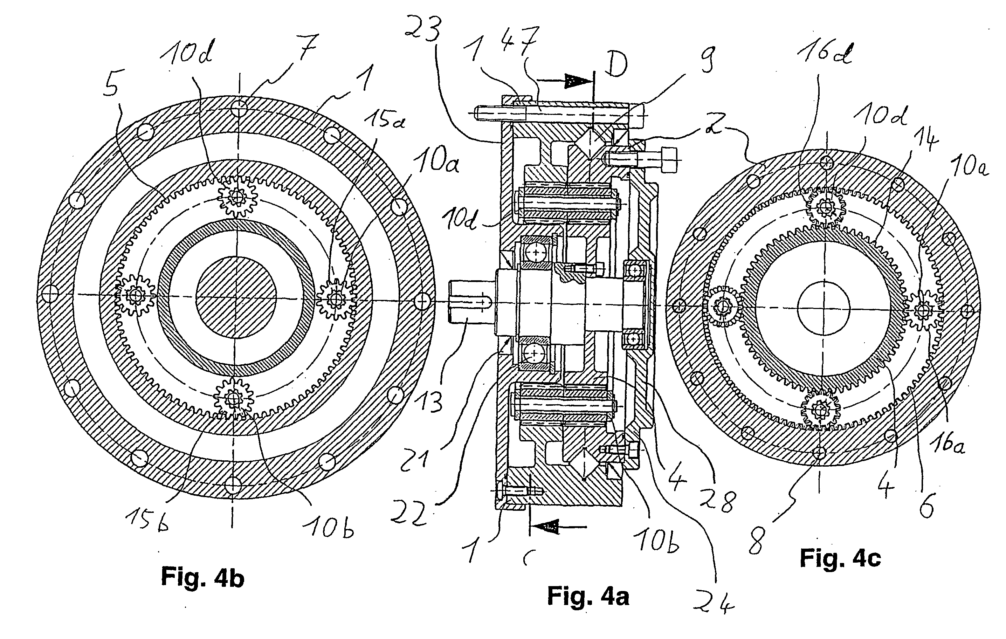

**In Fig. 2 und 4** dienen Löcher 7, 8 zur Befestigung der Verstellzahnräder an den Gelenkteilen.

Indem die Zähnezahl der zweiten Innenverzahnung 6 größer als die entsprechende Zähnezahl der ersten Innenverzahnung 5 festgelegt wird, kann anders als bei der gezeigten Ausführungsform der Fig. 2 eine Drehrichtungsumkehr gegenüber der Antriebswelle 3 festgelegt werden.

Die gezeigte Umlaufverstellvorrichtung beziehungsweise das Umlaufgetriebe gemäß Fig. 2 kann insbesondere derartig verwendet werden, dass das erste Verstellzahnrad 1 gehäuseseitig befestigt wird, zum Beispiel mit einem Gehäuse eines Motors, der die Antriebswelle 3 antreibt. In diesem Fall wird ein Abtrieb über das zweite Verstellzahnrad 2 erreicht. Alternativ dazu kann auch das zweite Verstellzahnrad 2 an einem Gehäuse befestigt werden, so dass das erste Verstellzahnrad 1 als Abtrieb genommen werden kann.

Bei der in **Fig. 4a - c** gezeigten weiteren Ausführungsform ist ein Antriebszahnrad 4 konzentrisch an einer Antriebswelle 13, zum Beispiel mittels der gezeigten Schrauben beziehungsweise Bolzen, befestigt. Dieses Antriebszahnrad 4 mit seiner Wellenaußenverzahnung 14 steht mit den zweiten Außenverzahnungsbereichen 16a - d der Umlaufzahnräder 10a - 10d im Eingriff, so dass ein Außenradpaarsystem gebildet wird. Die zweiten Außenverzahnungsbereiche 16a - 16d sind weiterhin mit der zweiten Innenverzahnung 6 des zweiten Verstellzahnrades 2 im Eingriff, wodurch ein Innenradpaarsystem gebildet wird. Die durch zwei Einzelzahnräder 17, 18 gebildeten Umlaufzahnräder 10a - 10d weisen axial versetzt erste Außenverzahnungsbereiche 15a - 15d auf, die wie in der ersten Ausführungsform bei drei Umlaufzahnrädern zu den zweiten Außenverzahnungsbereichen versetzt sind. Die ersten Außenverzahnungsbereiche 15a - 15d sind mit der ersten Innenverzahnung 5 des ersten Verstellzahnrades 1 im Eingriff und bilden ein Innenradpaarsystem; sie sind bei dieser Ausführungsform jedoch nicht mit der Wellenaußenverzahnung 14 im Eingriff. Indem das erste Verstellzahnrad 1 über in Löchern 7 vorgesehene Verbindungsbolzen 47 mit einer Abdeckung 23 an einem nicht gezeigten Gehäuse befestigt wird, kann das zweite Verstellzahnrad beziehungsweise eine axiale Abdeckplatte 28 als Abtrieb genommen werden. Indem die zweite Innenverzahnung 6 eine Zähnezahl von n, zum Beispiel n = 92, und die erste Innenverzahnung 5 eine Zähnezahl n-1, zum Beispiel n-1 = 91, aufweist, wird eine gleichsinnige Drehung des zweiten Verstellzahnrades 2 wie die Antriebswelle 13 erreicht.

In Fig. 4 kann wie gezeigt die Antriebswelle 13 über Lager 22 an dem ersten Verstellzahnrad 1 beziehungsweise der Platte 23 und über weitere Lager an der Abdeckplatte 28 gelagert werden.

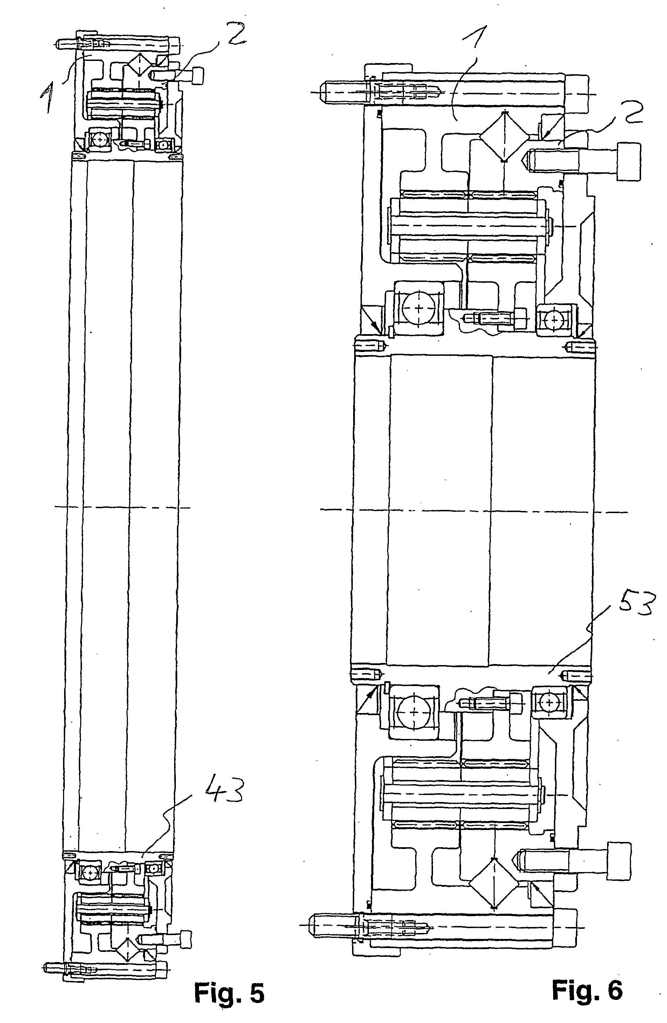

Die weiterhin gezeigten Ausführungsformen der Figuren 5 und 6 zeigen Hohlwellen 43, 53, wobei die weiteren Komponenten denjenigen der Fig. 4 entsprechen.

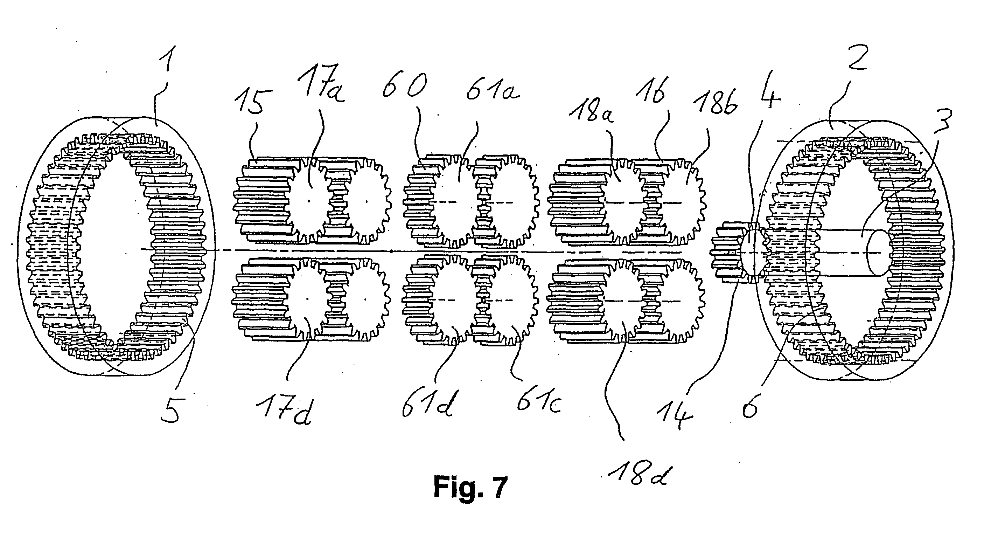

Die Ausführungsform der **Fig. 1 bis 6** mit zwei axial benachbarten Außenverzahnungsbereichen ermöglicht bereits durch Einstellung von unterschiedlichen Zähnezahlen der Außenverzahnungsbereiche und/oder Innenverzahnungen eine Vielzahl möglicher Untersetzungsverhältnisse. Um ein Untersetzungsverhältnis noch genauer einstellen zu können, sind gemäß der Ausführungsform von Fig. 7 dritte Außenverzahnungsbereiche 60 in den einzelnen Umlaufzahnrädern vorgesehen. Somit weist jedes Umlaufzahnrad drei axial zueinander benachbarte Einzelzahnräder 17 a bis 17 d, 61 a bis 61 d und 18 a bis 18 d auf. In Fig. 7 sind die Umlaufzahnräder hierbei zur Veranschaulichung in axialer Richtung auseinandergezogen, wobei sie bei dieser Ausführungsform wie auch der Ausführungsform von Fig. 1 tatsächlich starr miteinander gekoppelt, zum Beispiel verschweißt, verklebt, vernietet, verschraubt oder verkeilt sind beziehungsweise die Umlaufzahnräder als Spritzgussteile einteilig gefertigt sind.

Bei dieser Ausführungsform ist die Wellenaußenverzahnung 14 der Antriebswelle 3 in Eingriff mit dritten Außenverzahnungsbereichen 60, während die ersten Außenverzahnungsbereiche 15 wiederum in Eingriff mit der ersten Innenverzahnung 5 des ersten Verstellzahnrades 1, und die zweiten Außenverzahnungsbereiche 16 wieder in Eingriff mit der zweiten Innenverzahnung 6 des zweiten Verstellzahnrades 2 sind.

Hierdurch lässt sich bereits ein gewünschtes Untersetzungsverhältnis zwischen der Welle 3 und den Umlaufzahnrädern erreichen, das durch die Zähnezahl der Wellenaußenverzahnung 14 und die Zähnezahl der Außenverzahnungsbereiche 60 festgestellt ist. Durch die starre Kopplung der Einzelzahnräder 17, 61 und 18 wird die Drehbewegung jeweils auf die gesamten Umlaufzahnräder übertragen. Auch bei dieser Ausführungsform findet eine relative Verstellung der Verstellzahnräder 1 und 2 zueinander durch Unterschiede der Zähnezahlen der ersten Außenverzahnungsbereiche 15 und zweiten Außenverzahnungsbereiche 16, und/oder Unterschiede der Zähnezahlen der ersten innenverzahnung 5 und zweite Innenverzahnung 6 statt. Eines der beiden Verstellzahnräder, zum Beispiel wiederum das zweite Verstellzahnrad 2, kann zum Beispiel gehäusefest angeordnet werden, so dass sich eine Untersetzung der Drehbewegung der Antriebswelle 3 zu dem ersten Verstellzahnrad 1 ergibt. Hierbei kann das erreichte Untersetzungsverhältnis relativ frei gestaltet werden, da die Zähnezahl der dritten Außenverzahnungsbereiche 60 unabhängig von den Zähnezahlen der ersten Außenverzahnungsbereiche 15 und zweiten Außenverzahnungsbereiche 16 gewählt werden kann.

Wie aus **Fig. 5** ersichtlich ist, ist bei der hier gezeigten Ausführungsformen der Fig. 3 bis 5 die Zähnezahl der ersten Außenverzahnungsbereiche 15 und zweiten Außenverzahnungsbereiche 16 wiederum unterschiedlich, wie bereits mit Bezug auf die erste Ausführungsform der Fig. 1, 2 erläutert. Alternativ oder zusätzlich hierzu können Unterschiede der Zähnezahlen der Innenverzahnungen 5, 6 eingestellt werden.

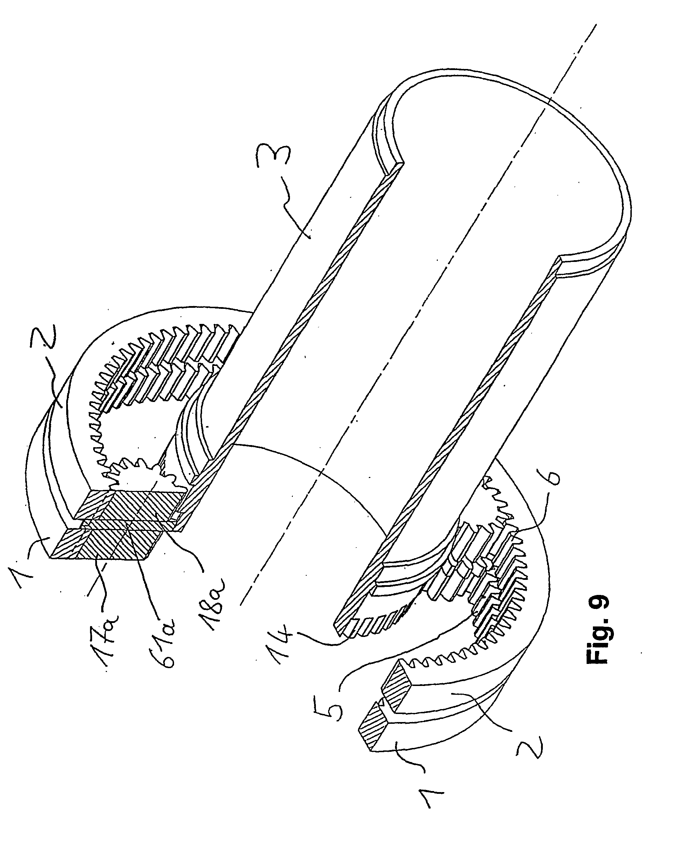

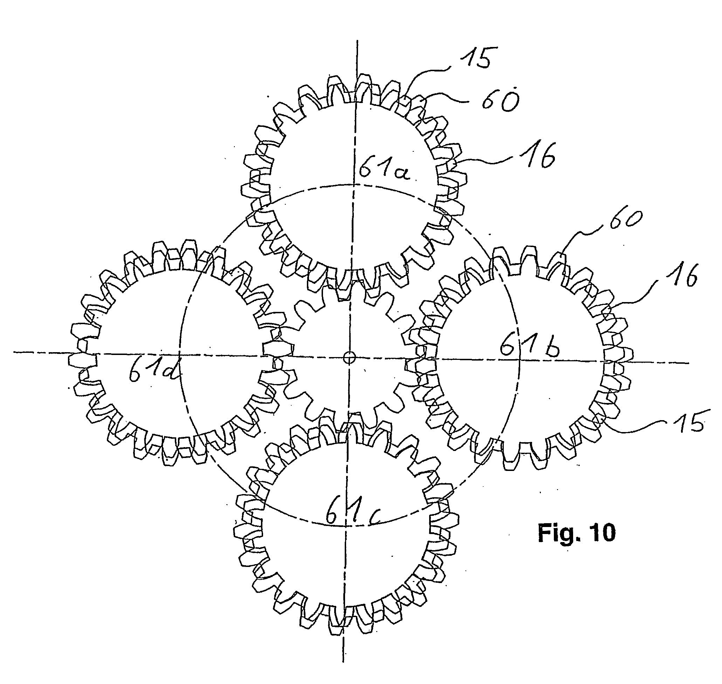

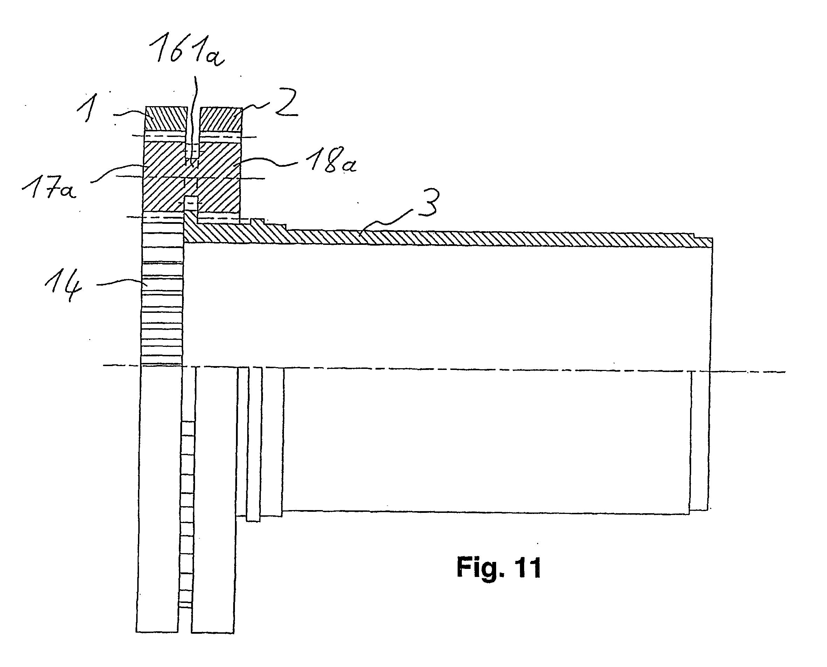

Bei dem Beispiel, das zur Erleichterung des Verständnisses der Erfindung dient, von **Fig. 7 bis 10** wird eine große Zähnezahl der dritten Außenverzahnungsbereiche erreicht, indem die Einzelzahnräder 61 a bis 61 d einen größeren Radius als die Einzelzahnräder 17 a bis 17 d und 16 a bis 16 d aufweisen. Dies ist insbesondere aus Fig. 4 ersichtlich. Alternativ hierzu kann gemäß Fig. 11 der Radius der dritten Einzelzahnräder 161 a bis 161 d auch kleiner als der Radius der ersten Einzelzahnräder 17 a bis 17d und zweiten Einzelzahnräder 18 a bis 18 d ausgebildet werden, wie aus Fig. 11 ersichtlich ist.

Eine Variation des Radius der dritten Einzelzahnräder 161 a bis 161 d ermöglicht somit eine Vielzahl von einstellbaren Zähnezahlen der dritten Außenverzahnungsbereiche 60. Gemäß **Fig. 11** kann ein kompakter Bau in radialer Richtung erreicht werden, da die Außenverzahnung 14 der Antriebswelle 3 in radialer Richtung teilweise überlappt mit den Einzelzahnrädern 17 a, 18 a.

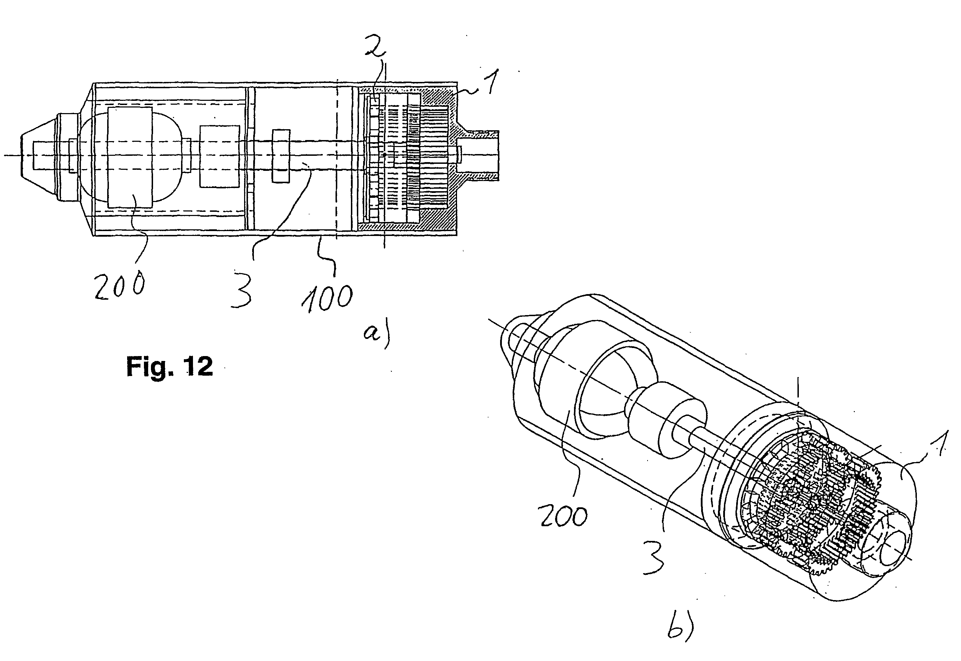

**Fig. 12** zeigt einen Antrieb mit einer Verstellvorrichtung in einem Gehäuse 100, in dem ein kleinbauender, schnell laufender Elektromotor 200 angeordnet ist. Indem das zweite Verstellzahnrad 2 starr an das Gehäuse 100 gekoppelt ist, kann eine Untersetzung der schnell laufenden Antriebswelle 3 auf das als Abtriebswelle wirkende erste Verstellzahnrad 1 bewirkt werden. Entsprechend kann auch alternativ zu dieser Ausführungsform das erste Verstellzahnrad 1 gehäusefest und das zweite Verstellzahnrad 2 als Abtriebswelle ausgebildet werden.

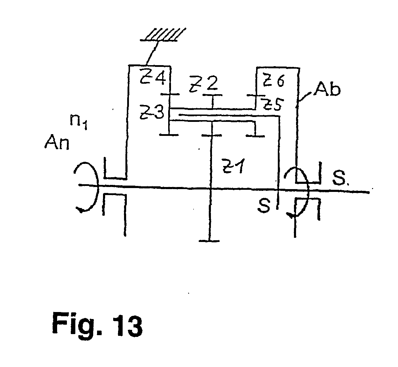

**Fig. 13** zeigt ein Blockschaltbild, bei dem

$z1$=Zähnezahl der Wellenaußenverzahnung (beziehungsweise des Sonnenrads),

$z2$= Zähnezahl des dritten Außenverzahnungsbereichs,

$z3$ = Zähnezahl des zweiten Außenverzahnungsbereichs,

$z4$ = Zähnezahl der zweiten Innenverzahnung,

$z5$= Zähnezahl des ersten Außenverzahnungsbereichs,

$z6$= Zähnezahl der ersten Innenverzahnung.

Hierbei dient das zweite Verstellzahnrad als gehäusefeste Anbringung, das erste Verstellzahnrad als Abtrieb Ab und die Antriebswelle als Antrieb An. (Von dem Planetenrad kann grundsätzlich auch ein Abgriff genommen werden.) Es ergibt sich eine

$$\text{Übersetzung } i = (z6 \times (1 + (z2 \times z4)/(z1 \times z3))) / (z6 - z5 \times z4 / z3).$$

Bei der Ausführungsform ohne dritten Außenverzahnungsbereich ist $z2=z3$ oder $z2=z5$.

Mit $Z1=54$, $z2 = z3 = z5=15$, $z4 = 84$, $Z6=86$ ergibt sich $i=109{,}889$.

Mit $z1=15$, $z2=z3=z5=10$, $Z4=35$, $Z6=36$ ergibt sich $i=120$,

mit $z1=15$, $z2=z3=10$, $Z4=35$, $Z5='9$, $Z6=31$ ergibt sich $i = -206{,}667$,

mit $z1=16$, $Z2=Z3=20$, $Z4=56$, $Z5=18$, $Z6=51$ ergibt sich $i=382{,}5$

mit $z1=16$, $z2=Z3=18$, $Z4=52$, $Z5=16$, $Z6=47$ ergibt sich $i=256{,}821$

mit $z1 =14$, $z2=22$, $z3=20$, $z4=56$, $Z5=18$, $Z6=51$ ergibt sich $i=459$

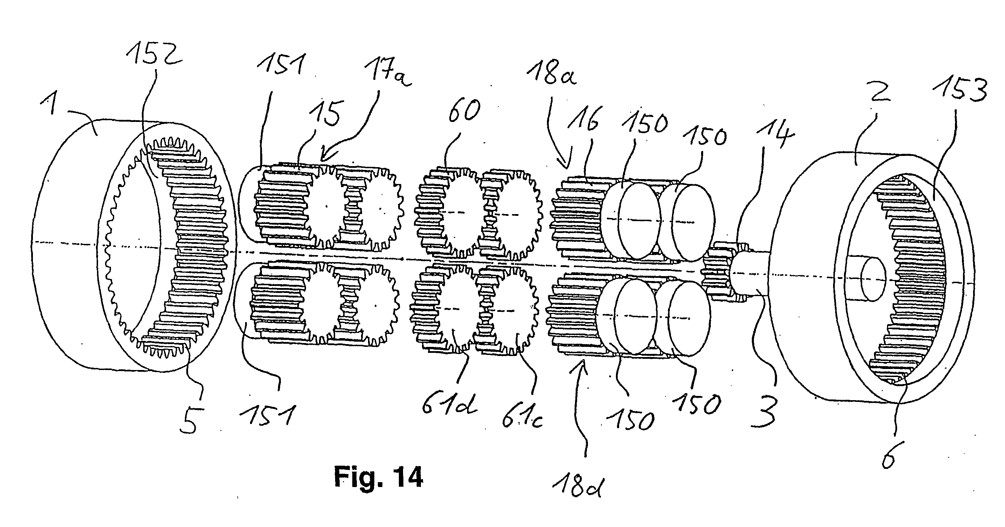

Bei dem Beispiel der **Fig. 14** sind gegenüber dem Beispiel der Fig. 7 axial seitlich der ersten und zweiten Außenverzahnungsbereiche 15, 16 und axial seitlich der ersten und zweiten Innenverzahnungen 5,6 Laufflächen 150,151,152,153 für eine Abrollbewegung der Umlaufzahnräder in den Verstellzahnrädern ausgebildet. Die Laufflächen 150,151,152,153 verlaufen in den einzelnen Zahnrädern jeweils auf radialer Höhe der Arbeitsteilungsdurchmesser, sodass sie aufeinander bei der Abrollbewegung der Umlaufzahnräder ebenfalls aneinander abrollen. Hierdurch kann eine radiale Abstützung der Umlaufzahnräder nach außen zum Abfangen von Fliehkräften erreicht werden, um ein allzu starkes Eindrücken der ersten und zweiten Außenverzahnungsbereiche in die ersten und zweiten Innenverzahnungen zu vermeiden. Weiterhin können hierdurch die einzelnen Umlaufzahnräder an axial zu einander versetzten Stellen an den Verstellzahnrädern abgestützt werden, sodass die Umlaufzahnräder gegen Verkippbewegungen gesichert werden. Hierdurch können insbesondere Drehmomente, die an den Umlaufzahnrädern aufgrund der unterschiedlichen Belastungen der ersten, zweiten und dritten Außenverzahnungsbereiche senkrecht zu der Achse entstehen, abgefangen beziehungsweise verringert werden. Alternativ zu diesen Laufflächen können die Umlaufzahnräder auch in festen Käfigen gehalten und zum Beispiel an ihren axialen Endflächen gestützt werden.

Erfindungsgemäß ist es auch möglich, mehr als drei verschiedene Außenverzahnungsbereiche nebeneinander zu setzen. Hierbei können grundsätzlich auch mehr als zwei Verstellzahnräder verwendet werden, die zum Beispiel wahlweise als Abtrieb gewählt werden können.

Die Antriebswelle kann wie in den Figuren gezeigt als Stabwelle, oder auch als Hohlwelle ausgebildet sein. Im letzten Feld kann ein Motor in der Antriebshohlwelle angeordnet werden.

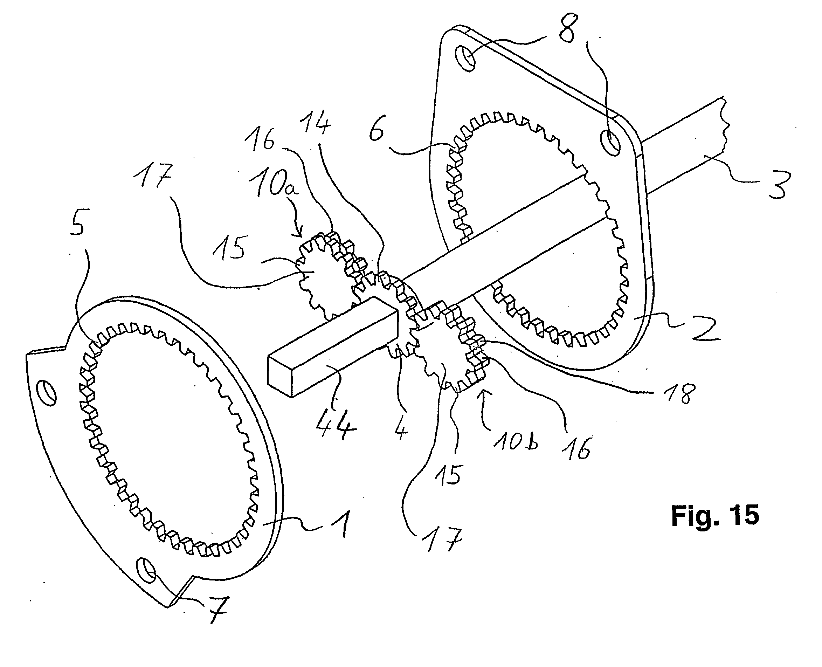

In den Figuren 15 bis 23 wird als eine Anwendung der erfindungsgemäßen Verstellvorrichtung eine Sitzlehnenverstellung für zum Beispiel einen Kraftfahrzeugsitz gezeigt. Gemäß Fig. 15 weist die Antriebswelle 3 an ihrem axialen Ende einen vierkantförmigen Bereich 44 auf, auf dem das Antriebszahnrad 9 mit der Wellenaußenverzahnung aufgesteckt ist.

Das erste Verstellzahnrad 1 ist an einem Sitzunterteil, das heißt insbesondere fahrzeugfest angebracht, wohingegen das zweite Verstellzahnrad an einer Sitzlehne eines Kraftfahrzeuges befestigt ist. Die erste Innenverzahnung 5 des ersten Verstellzahnrades 1 kann eine Zähnezahl von $m$ von zum Beispiel 38 aufweisen, die Zähnezahl der zweiten Innenverzahnung 6 eine kleinere Zähnezahl von zum Beispiel $n-1$, das heißt in diesem Beispiel 37 aufweisen. Bei einer Außenverzahnung von 12 Zähnen wird eine Untersetzung von $36/12 + 1 = 4$ erreicht

In **Fig. 15** dienen die böcher 7, 8 zur Befestigung der Verstellzahnräder aneinander.

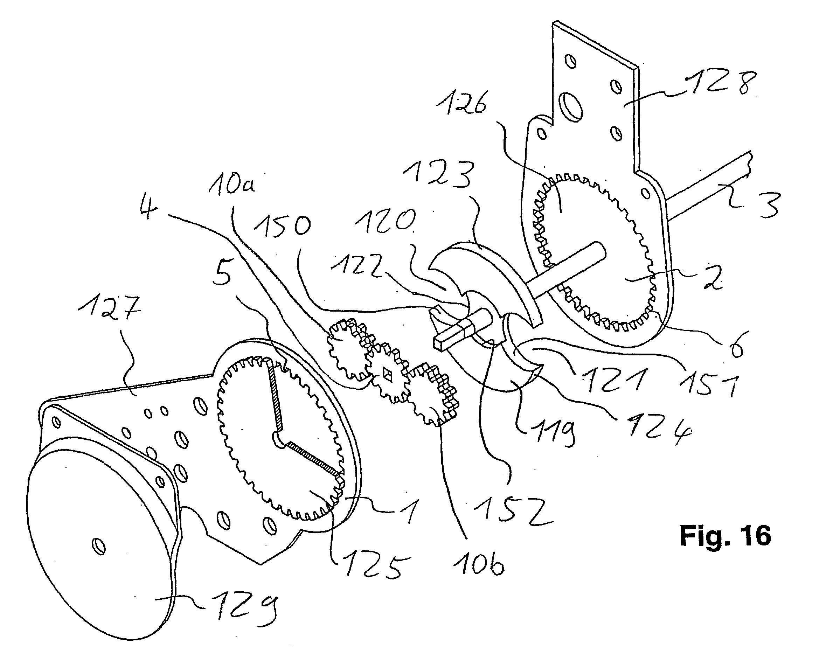

In **Fig. 16** ist zusätzlich zu der Ausführungsform der Fig. 15 ein Führungsrad 119 vorgesehen, das Ausnehmungen 120 und 121 zur Aufnahme der Umlaufzahnräder 10 a, b und eine Ausnehmung 122 zur Aufnahme des Antriebszahnrades 4 aufweist. Bis auf diese Ausnehmungen erstreckt sich das Führungsrad 119 über eine geschlossene Kreisfläche, deren radiale Außenumfangsabschnitte 123, 124 gleitfähig an der ersten Innenverzahnung und der zweiten Innenverzahnung 6 anliegen kann. Hierdurch wird eine radiale Führung erreicht, so dass eine Taumelbewegung der Welle und der Zahnräder in den Innenverzahnungen verhindert werden kann. Hierbei tritt zwar eine gewisse Reibung der Abschnitte 123 und 124 an den Innenverzahnungen auf, da bei Sitzlehnenverstellvorrichtungen jedoch keine hohen Drehzahlen und über die Lebensdauer relativ wenig Verstellbewegungen notwendig, ist der hierbei erzeugte Verschleiß vernachlässigbar. Weiterhin gleiten die Umlaufzahnräder 10 a, b in radialen Innenflächen 150, 151 und das Antriebszahnrad 4 in einer radialen Innenflächen 152 des Führungsrades 119.

Bei Verwendung von drei oder mehr Umlaufzahnrädern sind entsprechend mehr Ausnehmungen in dem Führungsrad 119 auszubilden.

Gemäß Fig. 16 können die Verstellzahnräder 1, 2 als Teile von Blechpressteilen 127, 128 ausgebildet werden, bei denen Bereiche 125, 126 lediglich tiefgepresst sind, so dass sie axial zu den Verstellzahnrädern 1, 2 versetzt sind. Hierdurch wird eine gute axiale Abdichtung der Sitzlehnenverstellvorrichtung gegenüber Schmutz, Feuchtigkeit, etc. erreicht und der Verschnitt beim Herstellen der Verstellzahnräder gering gehalten. Die in Fig. 2 gezeigte längliche Ausbildung der Blechpressteile 127, 128 kann mit den gezeigten Löchern zur Anbringung an dem Sitzunterbau beziehungsweise der Sitzlehne dienen.

Gemäß Fig. 16 können axiale Abdeckungen 129 auf einer oder beiden Seiten der Sitzlehnenverstellvorrichtung vorgesehen werden und in einfacher Weise auf die Welle 3 aufgesteckt werden. Weiterhin sind auch Befestigungen dieser Abdeckungen an der Sitzlehne beziehungsweise dem Sitzunterbau möglich, so dass sie auf der Welle gleiten beziehungsweise gleitend abdichten können.

Sämtliche in Fig. 15 und 16 gezeigten Teile bis auf die Welle 3 können als Pressteile, Stanzteile, insbesondere Blechpressteile und Blechstanzteile hergestellt werden, so dass ein einfacher, genauer und kostengünstiger Zusammenbau der Sitzlehnenverstellvorrichtung möglich ist.

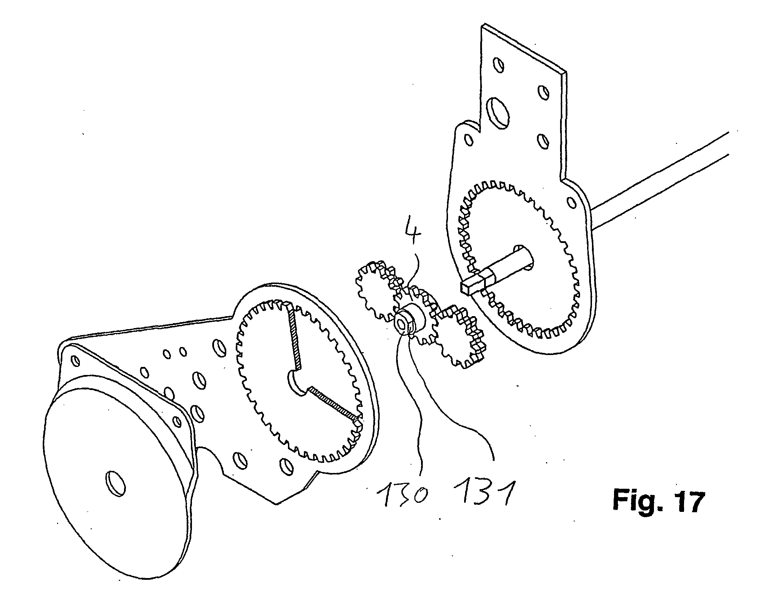

**Fig. 17** zeigt eine weitere Ausführungsform, bei der eine Buchse 130 zur Aufnahme der Verstellzahnräder 1, 2 vorgesehen ist. Die Buchse trägt weiterhin das Antriebszahnrad 9 und kann einfach auf die Welle 3 aufgesteckt werden.

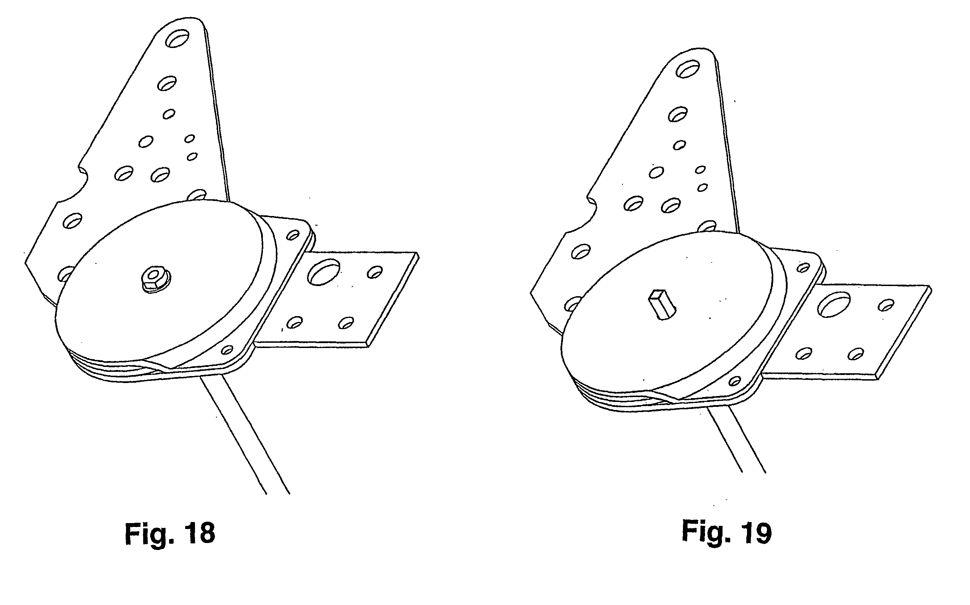

**Fig. 18** zeigt diese Ausführungsform im zusammengebauten Zustand. Eine Lagerung der Verstellzahnräder ist jedoch auch bei den Ausführungsformen der Figuren 15 und 16 möglich, wodurch bei direkter Lagerung auf der Welle im zusammengebauten Zustand die Ausbildung der **Figur 19** erreicht wird.

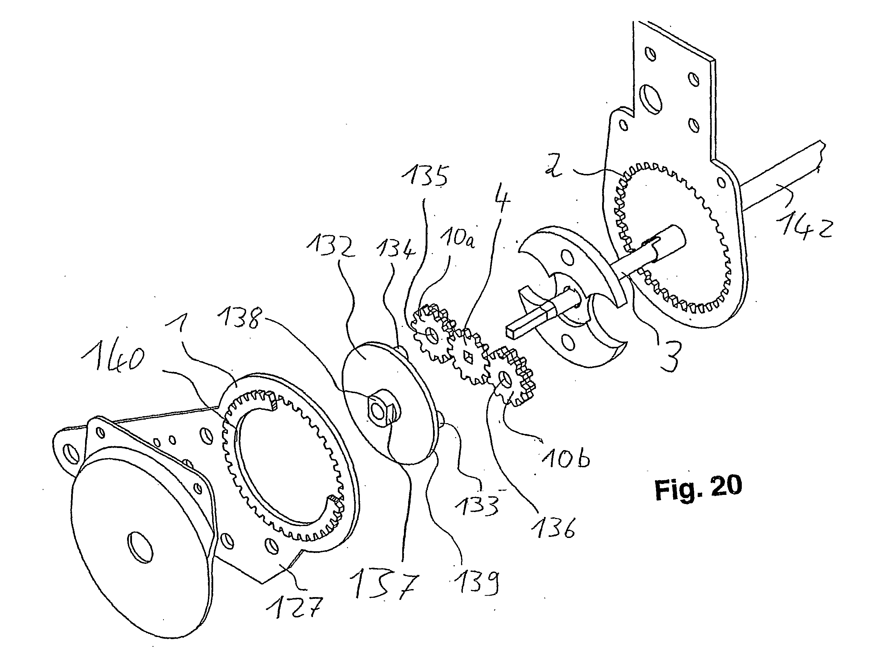

Bei der Ausführungsform der **Fig. 20** ist zusätzlich zu der Ausführungsform der Fig. 16 ein Antriebsrad 132 konzentrisch zu der Welle 3 vorgesehen. Das Antriebsrad 132 weist zwei Stifte 133, 134 zum Eingriff in Zentrallöcher 135, 136 der Umlaufzahnräder 10a,b auf. Die Stifte 134, 133 sind hierbei in den Zentrallöchern drehbar. Durch Drehung des Antriebsrades 132 kann somit eine direkte Umlaufbewegung der Umlaufzahnräder 10a,b auf dem Antriebszahnrad 4 erreicht werden, ohne dass hierzu die Welle 3 gedreht werden muss. Somit kann eine Verstellung mit einem höheren Drehmoment als Grobverstellung der Sitzlehne über das Antriebsrad 132 erreicht werden, wohingegen die Feinverstellung in der oben beschriebenen Weise über die Welle 3 erfolgt. Zur Betätigung von außen kann das Antriebsrad 132 einen axialen Vorsprung 138 mit zwei Abflachungen 137 aufweisen, auf die eine entsprechende Betätigungseinrichtung, zum Beispiel ein Hebel gesteckt wird. Erfindungsgemäß kann insbesondere eine Betätigung sowohl der Welle 3 als auch des Antriebsrades 132 über zum Beispiel einen gemeinsamen Drehknopf erfolgen, der in axialer Richtung zwischen zwei Positionen verstellt werden kann und hierbei wechselweise entweder in die Welle 3 oder das Antriebsrad 132 eingreift. Somit kann der Benutzer durch einfaches Herausziehen des Drehknopfes zwischen den beiden Verstellmöglichkeiten wählen.

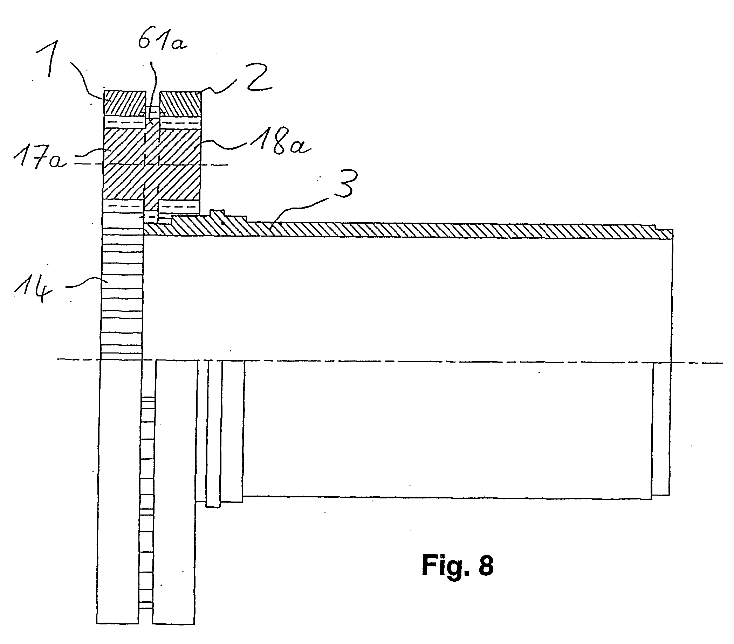

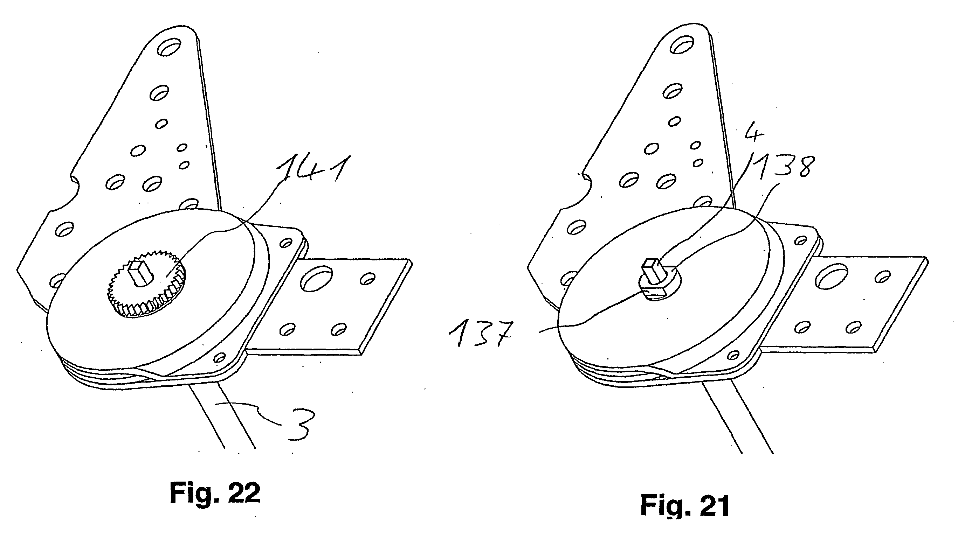

**Fig. 21** zeigt die Ausführungsform der Fig. 20, bei der der axiale Vorsprung 38 axial hervortritt. Eine Verstellvorrichtung, zum Beispiel ein Drehknopf kann somit entweder in die Abflachung 137 oder die Seiten des Vierkants 44 eingreifen, um die verschiedenen Verstellmöglichkeiten zu ermöglichen. Auf den axialen Vorsprung 138 kann gemäß Fig. 8 ein Außenzahnrad 141 aufgesteckt werden, so dass eine Bedienung der Grobverstellung über eine zusätzliche Rätsche zur besseren Übersetzung und das Außenzahnrad 141 möglich ist.

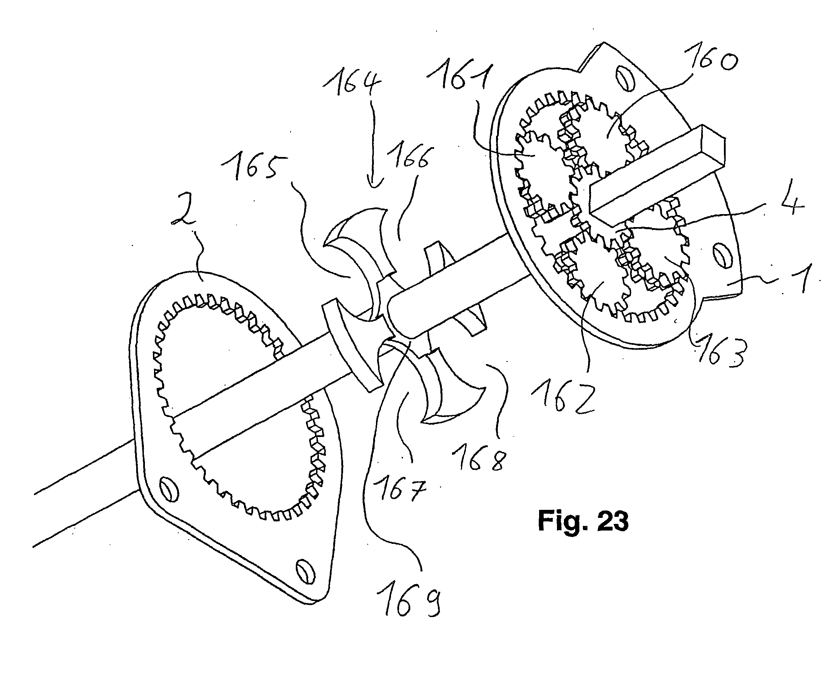

**Fig. 23** zeigt eine weitere Ausführungsform mit vier Umlaufrädern 160, 161, 162 und 163. Da die Verbindung zwischen dem Antriebszahnrad 4 und den Verstellzahnrädern 1, 2 bei dieser Ausführungsform über vier Umlaufräder, zum Beispiel jeweils zwei Zähne der vier Umlaufräder, erfolgt, kann eine hohe Festigkeit der Sitzlehnenverstellvorrichtung gewährleistet werden. Somit können hohe Kräfte beziehungsweise Drehmomente übertragen werden. Höhere Drehmomente können zum Beispiel bei einem Auffahrunfall von hinten auftreten, bei dem die Sitzlehne nach hinten beschleunigt wird. Weiterhin können sehr hohe Drehmomente bei einer Anbringung des Sicherheitsgurtes an der Sitzlehne im Falle eines Auffahrunfalls auf ein vorderes Objekt auftreten. Somit kann zusätzlich zu den oben beschriebenen erfindungsgemäßen Vorteilen hierbei eine hohe Unfallsicherheit gewährleistet werden.

Die vier Umlaufräder 160 bis 163 können gemäß Fig. 23 von einem Führungsrad 164 mit vier peripheren Ausnehmungen beziehungsweise Löchern 165, 166, 167, 168 sowie einer zentralen Ausnehmung beziehungsweise Aussparung 169 aufgenommen werden, wobei dieses Führungsrad wie in Fig. 16 beschrieben eine gleitende Führung sowohl in den Innenverzahnungen der Verstellzahnräder als auch in den Ausnehmungen 165 bis 168 für die Umlaufräder gewährleistet.

Gemäß Fig. 20 kann die Welle 3 in ein Schutzrohr 142 gesteckt werden. Die Blechpressteile der Figuren 18 bis 23 können auf beliebige Weise miteinander verbunden, zum Beispiel über die Löcher 7, 8 der Fig. 15 miteinander vernietet werden.

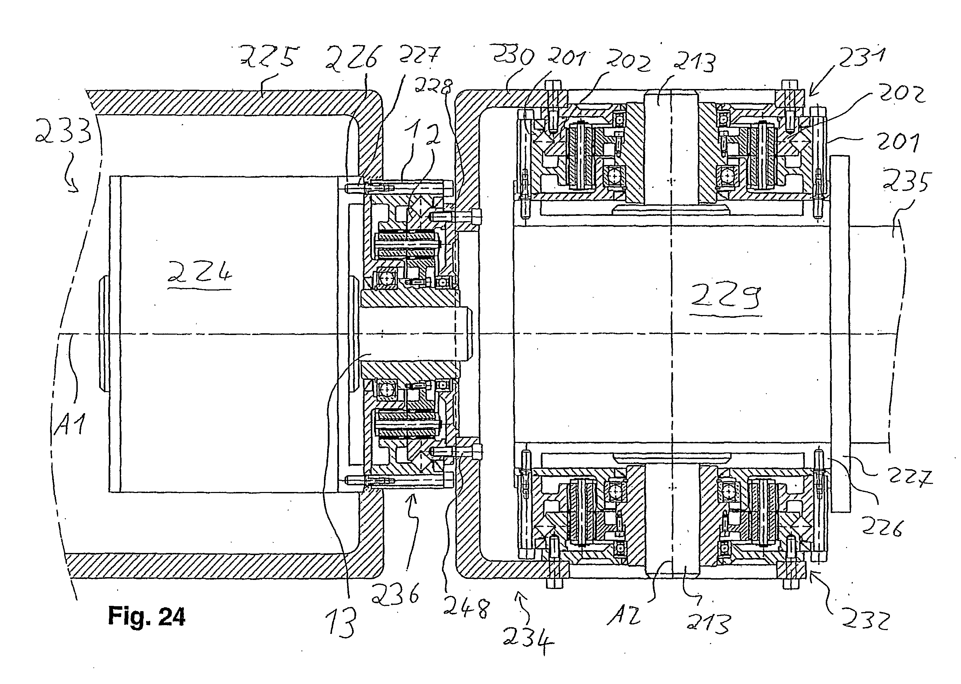

**Fig. 24** zeigt ein Robotergelenk, bei dem ein erstes Gelenkteil 233, zum Beispiel ein Roboterarm, mit einem zweiten Gelenkteil 234, sowie einem dritten Gelenkteil 235, zum Beispiel einem weiteren Roboterarmteil, über erfindungsgemäße Verstellvorrichtungen verbunden ist. Der Roboterarm 233 weist ein Gehäuse 225 auf, in dem ein Motor 224 angeordnet ist. Dieser Motor kann beispielsweise ein Elektromotor, zum Beispiel ein gängiger schnelllaufender Elektromotor kleiner Baugröße mit geringem Drehmoment sein. Der Elektromotor ist über eine Anschlussplatte 226 und eine Bolzenverbindung 227 mit einem ersten Verstellzahnrad 1 einer ersten erfindungsgemäßen Verstellvorrichtung 236 verbunden. Diese Verstellvorrichtung 236 kann jeder der oben beschriebenen Ausführungsformen, insbesondere auch einer Ausführungsform mit drei Außenverzahnungsbereichen entnommen sein. Die Welle 13 des ersten Motors 224 ist über Umlaufzahnräder mit einem zweiten Verstellzahnrad 2 verbunden, das über eine Abdeckplatte 228 und eine Bolzenverbindung 248 mit einem Gehäuse 230 des zweiten Gelenkteils 234 verbunden ist. Bei Betrieb des schnelllaufenden Elektromotors 224 ist dessen Gehäuse 226 über die Bolzenverbindung 227 starr mit dem Gehäuse 225 und dem ersten Verstellzahnrad 1 verbunden, so dass 3 das zweite Verstellzahnrad 2 als Abtrieb mit einer hohen Untersetzung gegenüber der Antriebswelle 13 dient. Hierbei kann eine hohe Untersetzung insbesondere bei einem geringen Unterschied der Zähnezahlen der ersten Innenverzahnung und der zweiten Innenverzahnung erreicht werden. Die Drehrichtung des zweiten Verstellzahnrades 2 kann in gewünschter Weise eingestellt werden, in dem die Zähnezahl der zweiten Innenverzahnung größer oder kleiner als diejenige der ersten Innenverzahnung ist.

Da erfindungsgemäß eine hohe Untersetzung gewährleistet werden kann, können kostengünstige und schnelllaufende, kleinbauende Elektromotor kleiner Baugröße mit hohen Drehzahlen und kleinem Drehmoment verwendet werden, so dass dennoch eine genaue Verstellung und gute Positionierbarkeit des zweiten Verstellzahnrades 2 beziehungsweise des Gehäuseteiles 230 gewährleistet wird. Hierbei ist die erfindungsgemäße Verstellvorrichtung selbstblockierend, so dass eine starre Positionierung des Gehäuseteils 230 gewährleistet werden kann. In dem zweiten Gelenkteil 234 ist ein zweiter Motor 229 mit einer Antriebswelle 213 vorgesehen, dessen Achse A2 zu der Achse A1 des ersten Motors 224 senkrecht steht oder zumindest geneigt ist. Gemäß Fig. 24 sind zwei Verstellvorrichtungen 231, 232 an beiden Enden des Motors 229 vorgesehen; es ist auch eine Ausbildung mit lediglich einer Verstellvorrichtung möglich.

Die zweite Verstellvorrichtung 231 und die zweite Verstellvorrichtung 232 sind wiederum wie in einer der oben beschriebenen Ausführungsformen aufgebaut. Sie können insbesondere drei Außenverzahnungsbereiche aufweisen. Gemäß Fig. 24 ist hierbei ein zweites Verstellzahnrad 202 starr mit dem Gehäuseteil 30 über eine Bolzenverbindung verbunden, so dass bei Betrieb der Welle 213 durch den Elektromotor 229 eine Verstellung dieses Motors 229 oder. seines Gehäuseteils 226 mit entsprechender Untersetzung gegenüber der Welle 213 über die Umlaufzahnräder und das erste Verstellzahnrad 201, das starr mit dem Motorgehäuse 226 verbunden ist, gewährleistet wird. Mit dem Gehäuse 226 des Motors 229 kann ein Flansch beziehungsweise eine Platte 227 mit einem dritten Gelenkteil 235 verbunden sein. Bei Betrieb des Motors 229 wird somit das dritte Gelenkteil 235 um die Achse A2 mit entsprechender Untersetzung gegenüber der Welle 213 verdreht.

Somit kann eine Verdrehung mit hoher Untersetzung sowohl um die Achse A1 als auch um die Achse A2 gewährleistet werden, wobei sämtliche Komponenten, das heißt Motoren und Verstellvorrichtungen innerhalb der Gelenkteile, zum Beispiel Roboterarme untergebracht werden können.

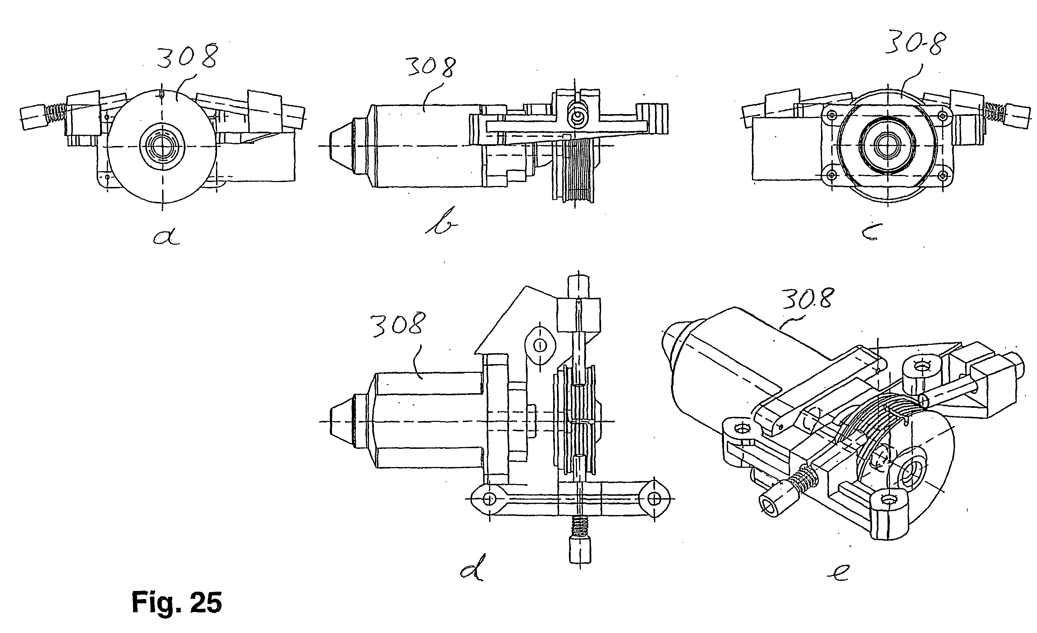

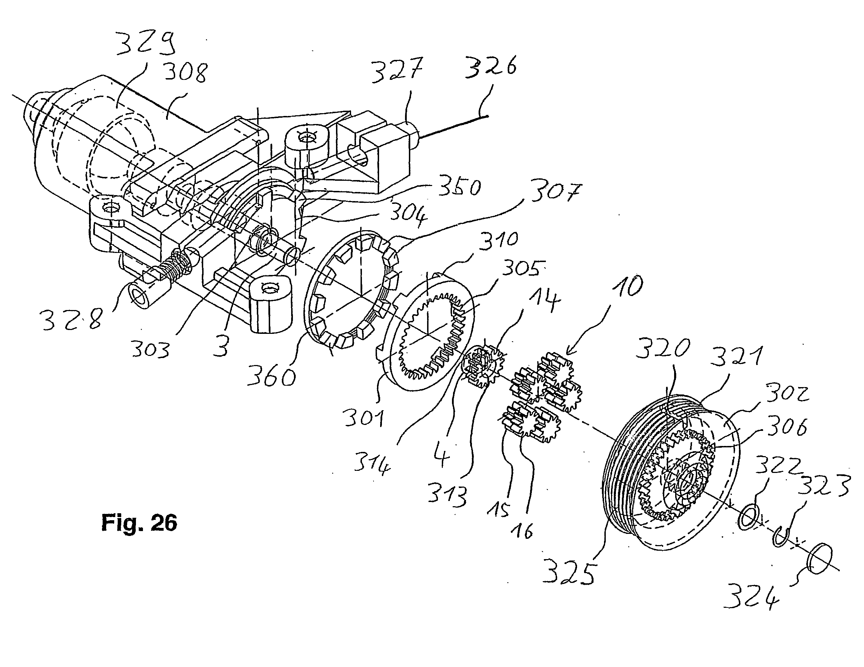

Gemäß den **Figuren 25, 26** ist ein Elektromotor in einem Gehäuse 308 vorgesehen. Eine Antriebswelle 3 weist eine Abflachung 303 für eine formschlüssige Aufnahme auf. Die Antriebswelle 3 ragt aus einer Abschlussscheibe 304 hervor, die als gehäuseseitige Befestigung dient. Die Abschlussscheibe 304 weist radiale Vorsprünge 305, zum Beispiel sechs gleichmäßig beabstandete radiale Vorsprünge 350 auf.

Auf der Antriebswelle 3 sind folgende weitere Bestandteile aufgesetzt:

Ein Stoßdämpfer- und Dichtring 360 ist über die Abschlussscheibe 304 derartig gelegt, dass radial nach innen ragende Gummiklötze 307 zwischen den radialen Vorsprüngen 350 angeordnet sind. Hierbei können zum Beispiel zwölf gleichmäßig voneinander beabstandete Gummiklötze vorgesehen sein, von denen jeweils zwei zwischen zwei radialen Vorsprüngen angeordnet sind.

Ein erstes Innenzahnrad 301 mit einer ersten Innenverzahnung 305 und axialen Vorsprüngen 310, die sich zu dem Gehäuse 308 hin erstrecken, ist derartig auf die Antriebswelle 3 aufgesetzt, dass die axialen Vorsprünge 310

EP 1 244 880 B1

jeweils zwischen zwei Gummiklötzen 307 vorgesehen sind. Somit wird eine Lagerung der axialen Vorsprünge 310 zwischen den radialen Vorsprüngen 350 mittels der dazwischen angeordneten Gummiklötze 307 erreicht. Diese Lagerung kann vorzugsweise dicht sein, so dass das erste Innenzahnrad 301 kein Spiel auf der Abschlussscheibe 304 besitzt. Aufgrund der Elastizität beziehungsweise Anelastizität der Gummiklötze 307 kann eine weiche Lagerung mit energieabsorbierender Wirkung erreicht werden. Weiterhin ist auch die Verwendung von voll-elastischen Materialien möglich.

Ein Antriebszahnrad 9 ist auf die Antriebswelle 3 derartig aufgesteckt, dass eine formschlüssige. Aufnahme 314 in einem Durchgangsloch 313 des Antriebszahnrades auf der Abflachung 303 der Antriebswelle 3 aufsitzt. Somit wird eine rotationsfeste Anbindung des Antriebszahnrades 9 auf der Antriebswelle 3 erreicht. Das Antriebszahnrad 9 weist eine Antriebsverzahnung 14 als Außenverzahnung auf.

Zwischen der Antriebsverzahnung 14 des Antriebszahnrades 9 und der ersten Innenverzahnung 305 sind Umlaufzahnräder 10 angeordnet, beispielsweise fünf voneinander gleichmäßig beabstandete Umlaufzahnräder 10. Die ersten Außenverzahnungen sind mit sowohl der Antriebsverzahnung 14 als auch der ersten Innenverzahnung 305 im Eingriff und bilden somit ein Umlaufgetriebe. Die zweiten Außenverzahnungen ragen in axialer Richtung aus dem ersten Innenzahnrad 301 heraus und sind mit einer zweiten Innenverzahnung 306 des zweiten Verstellzahnrades 302 im Eingriff. Die beiden Verstellzahnräder 301, 302 sind hierbei in axialer Richtung zueinander versetzt, vorzugsweise direkt benachbart, zum Beispiel aneinander gleitend gelagert. Die Umlaufzahnräder wirken somit mit ihren ersten Außenverzahnungen und zweiten Außenverzahnungen jeweils als Umlaufzahnräder in einem ersten und zweiten Zahnradsystem, so dass zwei miteinander starr gekoppelte Zahnradsysteme gebildet werden.

Die Umlaufzahnräder 10 können beispielsweise jeweils aus zwei axial miteinander verbundenen Einzelzahnrädern gebildet werden, die jeweils einen Außenverzahnungsbereich 15, 16 aufweisen. Die Kopplung der Zahnradsysteme erfolgt somit über die starre Kopplung der Einzelzahnräder, die jeweils paarweise zu einem Umlaufzahnrad verbunden sind.

Auf der zylindrischen Außenfläche des zweiten Innenzahnrades 302 ist eine Seiltrommel 321 ausgebildet, die mehrere, zum Beispiel vier nebeneinander liegende Wicklungen 325 zur Aufnahme eines Seilzuges aufweist. Hierbei kann vorteilhafterweise ein sich zumindest teilweise in axialer Richtung erstreckender Aufnahmeschlitz 320 vorgesehen sein, in dem ein Seilzug 321 mit einem Seilabschnitt zunächst eingelegt werden kann, woraufhin durch eine Verdrehung des zweiten Innenzahnrades mit der Seiltrommel 321 eine Aufwicklung des Bandes über ein oder mehrere Wicklungen 235 erreicht werden kann, so dass der in dem Aufnahmeschlitz 320 eingelegte Seilabschnitt radial von dem Seilzug 326 auf den Wicklungen 325 festgehalten wird.

Die Befestigung des Zahnradsystems auf der Antriebswelle 2 kann wie in **Fig. 26** gezeigt über eine Unterlegscheibe 322, eine Sicherung 323 (zum Beispiel ein Spannring) sowie eine Trommelabdichtung 324 erreicht werden. Somit wird ein kompaktes und nach außen abgedichtetes System gebildet.

Der Seilzug 326 kann in der Seilzugverstellvorrichtung über Zuführungen 327, 328 zu der Seiltrommel 321 geleitet werden. Die Seilzugführung erfolgt über die Seiltrommel 321, auf der der Seilzug in einigen Wicklungen aufgewickelt ist.

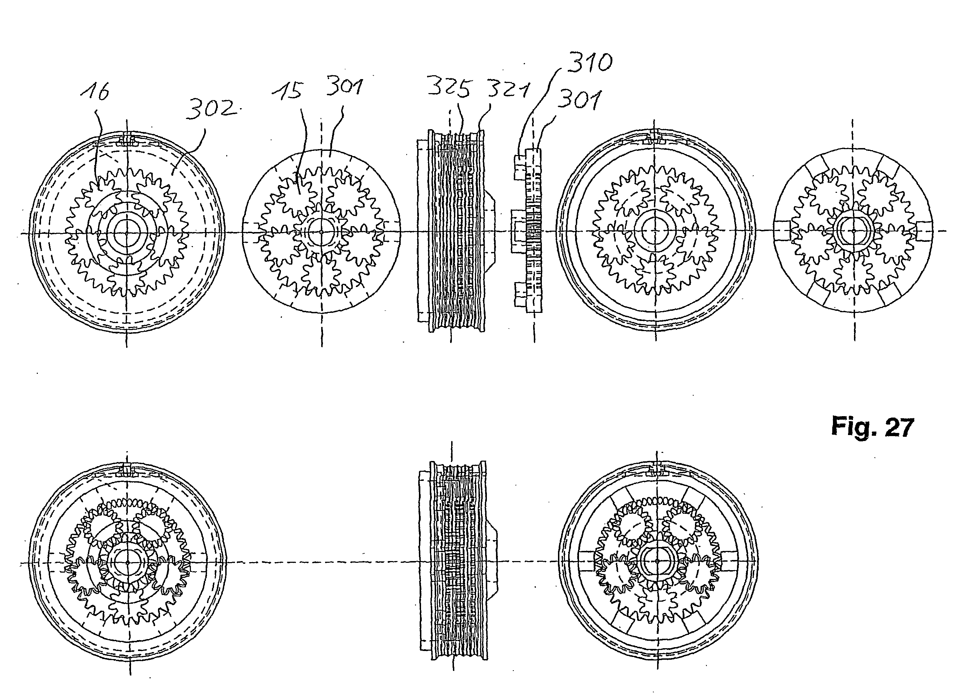

Bei der Ausführungsform der Fig. 26 sind die Zähnezahlen der ersten Außenverzahnung 15 und zweiten Außenverzahnung 16 der Umlaufzahnräder gleich, in dem in **Fig. 27** gezeigten Beispiel beträgt diese Zähnezahl zehn. Die Zähnezahlen der ersten Innenverzahnung 305 und der zweiten Innenverzahnung 306 sind ungleich. Um eine Untersetzung der Drehgeschwindigkeit zu erreichen, ist die Zähnezahl der zweiten Innenverzahnung größer als die Zähnezahl der ersten Innenverzahnung 305. So kann die Zähnezahl der ersten Innenverzahnung 35 betragen und die Zähnezahl der zweiten Innenverzahnung 36. Durch den relativ geringen Zähnezahlunterschied von zum Beispiel nur eins kann eine besonders hohe Untersetzung erreicht werden.

Weiterhin können entsprechend den obigen Ausführungen die Zähnezahlen der ersten Innenverzahnung und zweiten Innenverzahnung 119 ebenfalls ungleich sein. Die Zähnezahl kann entsprechend zum Beispiel 35 und 30 betragen. Weiterhin können die Zähnezahlen der ersten Außenverzahnung und der zweiten Außenverzahnung unterschiedlich sein. Zur Erreichung einer Untersetzung sollte hierbei die Zähnezahl der ersten Außenverzahnung größer als die Zähnezahl der zweiten Außenverzahnung eines Umlaufzahnrades sein. Die Zähnezahl der ersten Außenverzahnung kann beispielsweise 10, die Zähnezahl der zweiten Außenverzahnung beispielsweise 9 betragen.

Die Zahnräder können bei allen Ausführungsformen beliebig, zum Beispiel trapezförmig sein oder als Evolventen ausgebildet sein. Weiterhin können jeweils korrigierte Zahnradsysteme verwendet werden.


**Patentansprüche**

**1.** Verstellvorrichtung, mit

einem ersten Verstellzahnrad (1, 301) mit mindestens einem ersten Verstellverzahnungsbereich (5),

einem zweiten Verstellzahnrad (2, 302) mit mindestens einem zweiten Verstellverzahnungsbereich (6), einer konzentrisch zu den Verstellzahnrädern (1, 301; 2, 302) angeordneten Antriebswelle (3) mit einer Antriebswellenaußenverzahnung ( 14)

und mindestens zwei Umlaufzahnrädern (10 a - d), die Umlaufverzahnungsbereiche (15, 16, 60) aufweisen, wobei ein erster Verstellverzahnungsbereich (5) in Eingriff mit einem ersten Umlaufverzahnungsbereich (15) jedes Umlaufzahnrades (10 a - d) und ein zweiter Verstellverzahnungsbereich (6) in Eingriff mit einem zweiten Umlaufverzahnungsbereich (16) jedes Umlaufzahnrades (10 a - d) ist,
wobei die Antriebswellenverzahnung (14) in Eingriff mit dem zweiten Umlaufverzahnungsbereich (16, 60) jedes Umlaufzahnrades (10a - d) ist,
wobei die Verstellverzahnungsbereiche (5, 6) als Innenverzahnungen mit voneinander verschiedenen Zähnezahlen ausgebildet sind,
wobei die erste Innenverzahnung (5) in Eingriff mit einem ersten Umlaufverzahnungsbereich (15) jedes Umlaufzahnrades (10 a - d) und die zweite Innenverzahnung (6) in Eingriff mit einem zweiten Umlaufverzahnungsbereich (16) jedes Umlaufzahnrades (10 a - d) ist und die Wellenaußenverzahnung (14) in Eingriff mit einem der Umlaufverzahnungsbereiche (16, 60) jedes Umlaufzahnrades (10 a - d) ist
und die erste Innenverzahnung (5) und die zweite Innenverzahnung (6) unterschiedliche Zähnezahlen (n, n-x) aufweisen, wobei die erste Innenverzahnung (5) und die zweite Innenverzahnung (6) gleiche Arbeitsteilungsdurchmesser aufweisen, **dadurch gekennzeichnet, dass** die mit den ersten und zweiten Verstellverzahnungsbereichen (5, 6) in Eingriff befindlichen Umlaufverzahnungsbereiche (15, 16) axial zueinander versetzt sind und unterschiedliche Zähnezahlen (m) aufweisen, wobei das Übersetzungsverhältnis des ersten Verstellverzahnungsbereichs (5) zum ersten Umlaufverzahnungsbereich (15) von dem Übersetzungsverhältnis des zweiten Verstellverzahnungsbereichs (6) zum zweiten Umlaufverzahnungsbereich (16) verschieden ist.

2. Verstellvorrichtung nach Anspruch 1, **dadurch gekennzeichnet, dass** die Zähnezahlen (n, n-1) der Innenverzahnungen (5, 6) und die Zähnezahlen (m) der ersten und zweiten Außenverzahnungsbereiche (15 a - d, 16 a - d) in einem Verhältnis von 3:1 bis 12:1, vorzugsweise 5:1 bis 8:1 stehen.

3. Verstellvorrichtung nach Anspruch 1 oder 2, **dadurch gekennzeichnet, dass** sich die Zähnezahl (n) der ersten Innenverzahnung (5) von der Zähnezahl (n-1) der zweiten Innenverzahnung (6) und/oder die Zähnezahl der ersten Außenverzahnungsbereiche (15) von der Zähnezahl der zweiten Außenverzahnung (16) um 1 unterscheidet.

4. Verstellvorrichtung nach einem der voranstehenden Ansprüche, **dadurch gekennzeichnet, dass** ein Führungsrad (119) an der Welle (3) befestigt ist, das Ausnehmungen (120, 121, 122) mit inneren Anlageflächen (150, 151, 152) zur gleitfähigen Aufnahme der Umlaufzahnräder (10a, b) und des Antriebszahnrades (4) aufweist und radial äußere Anlageflächen (123, 124) zur gleitfähigen Anlage an der ersten und/oder zweiten Innenverzahnung (5, 6) aufweist.

5. Verstellvorrichtung nach einem der voranstehenden Ansprüche, **dadurch gekennzeichnet, dass** ein Umlaufantriebsrad (132) für eine Grobverstellung konzentrisch aus der Welle angeordnet ist, das mindestens zwei Stifte (133, 134) zum insbesondere drehbaren Eingriff in Zentrallöcher (135, 136) der Umlaufzahnräder (10a, b) aufweist, dass das Umlaufantriebsrad (132) von außerhalb der Verstellvorrichtung betätigbar ist, vorzugsweise über Abflachungen (137) eines axialen Vorsprungs (138), wobei das Umlaufantriebsrad (132) über eine radiale Außenfläche (139) drehbar in einem Verstellzahnrad (1) oder einer Anlage (140) eines mit dem Verstellzahnrad zusammenhängenden Blechpressteils (127) gelagert ist.

6. Verstellvorrichtung nach einem der voranstehenden Ansprüche, **dadurch gekennzeichnet, dass** an der Welle (3) ein von außen zugängliches Betätigungszahnrad (141) zur Bedienung über eine Ratsche vorgesehen ist.

7. Verstellvorrichtung nach einem der voranstehenden Ansprüche, **dadurch gekennzeichnet, dass** die Verstellzahnräder (1, 2, 301, 302) als Blechstanzteile, Blechpressteile oder Bereiche von Blechpressteilen (127, 128) gefertigt sind.

8. Verstellvorrichtung nach Anspruch 7, **dadurch gekennzeichnet, dass** mindestens ein Verstellzahnrad (1, 2, 301, 302) als äußerer Bereich eines Blechpressteils (127, 128) ausgebildet ist, dessen innerer Bereich (125, 126) tiefgepresst ist.

9. Gelenk, insbesondere Robotergelenk, mit mindestens drei Gelenkteilen (233, 234, 235), wobei ein zweiter Gelenkteil (234) über eine erste Verstellvorrichtung nach einem der voranstehenden Ansprüche gegenüber einem ersten Gelenkteil (233) um eine erste Achse (A1) verdrehbar ist und ein dritter Gelenkteil (235) gegenüber dem zweiten Gelenkteil (234) über eine zweite Verstellvorrichtung (231) nach einem der voranstehenden Ansprüche um eine von der ersten Achse (A1) verschiedene zweite Achse (A2) verdrehbar ist.

10. Gelenk nach Anspruch 9, **dadurch gekennzeichnet, dass** die zweite Achse (A2) gegenüber der ersten Achse (A1) verdreht ist, vorzugsweise senkrecht zu dieser verläuft.

11. Gelenk nach Anspruch 9 oder 10, **dadurch gekennzeichnet, dass** der erste Gelenkteil (233) und der zweite Gelenkteil (234) jeweils mit einem Verstellzahnrad (1, 2) der ersten Verstellvorrichtung (236) verbunden ist und/oder der zweite Gelenkteil (234) und der dritte Gelenkteil (235) jeweils mit einem Verstellzahnrad (201, 202) der zweiten Verstellvorrichtung (231) verbunden ist.

12. Gelenk nach einem der Ansprüche 9 bis 11, **dadurch gekennzeichnet, dass** in dem ersten Gelenkteil (233) ein erster Antriebsmotor (224) zur Verdrehung des zweiten Gelenkteiles (234) gegenüber dem ersten Gelenkteil (233) angeordnet ist.

13. Gelenk nach einem der Ansprüche 9 bis 12, **dadurch gekennzeichnet, dass** in dem zweiten Gelenkteil (234) ein zweiter Antriebsmotor (229) zur Verdrehung des dritten Gelenkteils (235) gegenüber dem zweiten Gelenkteil (234) angeordnet ist.

14. Gelenk nach einem der Ansprüche 9 bis 13, **dadurch gekennzeichnet, dass** der zweite Gelenkteil (234) und der dritte Gelenkteil (235) über die zweite Verstellvorrichtung (231) und eine dritte Verstellvorrichtung (232) nach einem der Ansprüche 1 bis 6 drehbar verbunden sind.

15. Gelenk nach einem der Ansprüche 9 bis 14, **dadurch gekennzeichnet, dass** die erste Verstellvorrichtung (236) in dem ersten Gelenkteil (233) und/oder die zweite Verstellvorrichtung (231) und gegebenenfalls die dritte Verstellvorrichtung (232) in dem zweiten Gelenkteil (234) angeordnet sind.

16. Seilzugverstellvorrichtung zum Verstellen eines Seilzuges (326), insbesondere für einen Fensterheber oder ein Schiebedach, mit einer Verstellvorrichtung nach einem der Ansprüche 1 bis 8, wobei das erste Verstellzahnrad (301) gehäuseseitig befestigbar ist und das zweite Verstellzahnrad (302) an einer Seiltrommel (21) befestigbar ist.

17. Seilzugverstellvorrichtung nach Anspruch 16, **dadurch gekennzeichnet, dass** die Seiltrommel (321) an einem radialen Außenumfang des zweiten Verstellzahnrades (302) angebracht ist.

18. Seilzugverstellvorrichtung nach Anspruch 17, **dadurch gekennzeichnet, dass** auf der Seiltrommel mehrere, axial nebeneinander angeordnete Wicklungen (325) ausgebildet sind.

19. Seilzugverstellvorrichtung nach Anspruch 17 oder 18, **dadurch gekennzeichnet, dass** auf der Seiltrommel (321) ein zumindest teilweise in axialer Richtung verlaufender Aufnahmeschlitz (320) zum Aufnehmen eines Seilzugabschnittes vorgesehen ist, wobei ein aufgenommener Seilzugabschnitt durch den auf den Wicklungen (325) aufliegenden Seilzug radial festgehalten wird.

20. Seilzugverstellvorrichtung nach einem der Ansprüche 16 bis 19, **dadurch gekennzeichnet, dass** das erste Verstellzahnrad (301) mit einer gehäuseseitigen Abschlußscheibe (304) torsionsweich und/oder mit Winkelspiel verbunden ist.

21. Seilzugverstellvorrichtung nach Anspruch 20, **dadurch gekennzeichnet, dass** zwischen dem ersten Verstellzahnrad und der Abschlußscheibe (304) ein Stossdämpferring (306) angeordnet ist.

22. Seilzugverstellvorrichtung nach Anspruch 21, **dadurch gekennzeichnet, dass** das erste Verstellzahnrad (301) axiale Vorsprünge (310) aufweist, die zwischen radialen Vorsprüngen (305) der Abschlußscheibe (304) liegen, wobei Stossdämpferelemente, vorzugsweise Gummiblöcke (307), des Stossdämpferringes (306) zwischen den radialen Vorsprüngen (305) und den axialen Vorsprüngen (310) angeordnet sind.

23. Seilzugverstellvorrichtung nach Anspruch 22, **dadurch gekennzeichnet, dass** die Stossdämpferelemente (307) dichtend zwischen den radialen Vorsprüngen (305) und den axialen Vorsprüngen (310) anliegen.

**24.** Fensterheber oder Schiebedachheber mit einer Seilzugverstellvorrichtung nach einem der Ansprüche 16 bis 23.

**Claims**

1. Adjusting device having

   a first adjusting gearwheel (1, 301) with at least one first adjusting toothing region (5),
   a second adjusting gearwheel (2, 302) with at least one second adjusting toothing region (6),
   a drive shaft (3) which is arranged concentrically with the adjusting gearwheels (1, 301; 2, 302) and has a drive shaft external toothing (14)
   and at least two revolving gearwheels (10a - d) which have revolving toothing regions (15, 16, 60),
   a first adjusting toothing region (5) being in engagement with a first revolving toothing region (15) of each revolving gearwheel (10a - d) with a second adjusting toothing region (6) being in engagement with a second revolving toothing region (16) of each revolving gearwheel (10a - d),
   the drive shaft toothing (14) being in engagement with the second revolving toothing region (16, 60) of each revolving gearwheel (10a - d),
   the adjusting toothing regions (5, 6) being the same as internal toothings having a differing number of teeth, the first internal toothing (5) being in engagement with a first revolving toothing region (15) of each revolving gearwheel (10 a - d) and the second internal toothing (6) being in engagement with a second revolving toothing region (16) of each revolving gearwheel (10 a - d), and the shaft external toothing (14) being in engagement with one of the revolving toothing regions (16, 60) of each revolving gearwheel (10a - d), and the first internal toothing (5) and the second internal toothing (6) having different numbers of teeth (n, n-x), the first internal toothing (5) and
   the second internal toothing (6) having identical working pitch diameters, **characterized in that** the revolving toothing regions (15, 16) which are in engagement with the first and second adjusting toothing regions (5, 6) are offset axially with respect to each other and have different numbers of teeth (m), the transition ratio of the first adjusting toothing region (5) to the first revolving toothing region (15) differing from the transmission ratio of the second adjusting toothing region (6) to the second revolving toothing region (16).

2. Adjusting device according to Claim 1, **characterized in that** the number of teeth (n, n-1) of the internal toothing (5, 6) and the number of teeth (m) of the first and second external toothing regions (15 a - d, 16 a - d) are in a ratio of 3:1 to 12:1, preferably 5:1 to 8:1.

3. Adjusting device according to Claim 1 or 2, **characterized in that** the number of teeth (n) of the first internal toothing (5) differs from the number of teeth (n-1) of the second internal toothing (6) and/or the number of teeth of the first external toothing regions (15) differs from the number of teeth of the second external toothing (16) by 1.

4. Adjusting device according to one of the preceding claims, **characterized in that** a guide wheel (119) is fastened to the shaft (3) and has recesses (120, 121, 122) with inner bearing surfaces (150, 151, 152) for slideably accommodating the revolving gearwheels (10a, b) and the driving gearwheel (4) and with radially outer bearing surfaces (123, 124) for slideably bearing against the first and/or second internal toothing (5, 6).

5. Adjusting device according to one of the preceding claims, **characterized in that** a revolving driving wheel (132) for a rough adjustment is arranged concentrically from the shaft and has at least two pins (133, 134) for the, in particular rotatable, engagement in central holes (135, 136) of the revolving gearwheels (10a, b), **in that** the revolving driving wheel (132) can be actuated from outside the adjusting device, preferably via flattened sections (137) of an axial projection (138), the revolving driving wheel (132) being mounted via a radial outer surface (139) rotatably in an adjusting gearwheel (1) or an abutment (140) of a sheet-metal pressed part (127) connected to the adjusting gearwheel.

6. Adjusting device according to one of the preceding claims, **characterized in that** an actuating gearwheel (141) which is accessible from the outside and is intended for operation via a ratchet is provided on the shaft (3).

7. Adjusting device according to one of the preceding claims, **characterized in that** the adjusting gearwheels (1, 2, 301, 302) are manufactured as sheet-metal punched parts, sheet-metal pressed parts or regions of sheet-metal pressed parts (127, 128).

8. Adjusting device according to Claim 7, **characterized in that** at least one adjusting gearwheel (1, 2, 301, 302) is designed as an outer region of a sheet-metal pressed part (127, 128), the inner region (125, 126) of which is deep-pressed.

9. Joint, in particular joint of a robot, having at least three articulated parts (233, 234, 235), a second articulated part (234) being rotatable via a first adjusting device according to one of the preceding claims relative to a first articulated part (233) about a first axis (A1) and a third articulated part (235) being rotatable relative to the second articulated part (234) via a second adjusting device (231) according to one of the preceding claims about a second axis (A2) which is different from the first axis (A1).

10. Joint according to Claim 9, **characterized in that** the second axis (A2) is rotated relative to the first axis (A1), preferably runs perpendicularly with respect to the latter.

11. Joint according to Claim 9 or 10, **characterized in that** the first articulated part (233) and the second articulated part (234) are connected in each case to an adjusting gearwheel (1, 2) of the first adjusting device (236) and/or the second articulated part (234) and the third articulated part (235) are connected in each case to an adjusting gearwheel (201, 202) of the second adjusting device (231).

12. Joint according to one of Claims 9 to 11, **characterized in that** a first driving motor (224) for rotating the second articulated part (234) relative to the first articulated part (233) is arranged in the first articulated part (233).

13. Joint according to one of Claims 9 to 12, **characterized in that** a second driving motor (229) for rotating the third articulated part (235) relative to the second articulated part (234) is arranged in the second articulated part (234).

14. Joint according to one of Claims 9 to 13, **characterized in that** the second articulated part (234) and the third articulated part (235) are connected rotatably via the second adjusting device (231) and a third adjusting device (232) according to one of Claims 1 to 6.

15. Joint according to one of Claims 9 to 14, **characterized in that** the first adjusting device (236) is arranged in the first articulated part (233) and/or the second adjusting device (231) and, if appropriate, the third adjusting device (232) are arranged in the second articulated part (234).

16. Cable-pull adjusting device for adjusting a cable pull (326), in particular for a window lifter or a sliding roof, having an adjusting device according to one of Claims 1 to 8, it being possible for the first adjusting gearwheel (301) to be fastened on the housing side and for the second adjusting gearwheel (302) to be fastened on the cable drum (21).

17. Cable-pull adjusting device according to Claim 16, **characterized in that** the cable drum (321) is fixed on a radial outer circumference of the second adjusting gearwheel (302).

18. Cable-pull adjusting device according to Claim 17, **characterized in that** a plurality of windings (325) arranged axially next to one another are formed on the cable drum.

19. Cable-pull adjusting device according to Claim 17 or 18, **characterized in that** a holding slot (320) which runs at least partially in the axial direction and is intended for holding a cable-pull section is provided on the cable drum (321), a held cable-pull section being secured radially by the cable pull resting on the windings (325).

20. Cable-pull adjusting device according to one of Claims 16 to 19, **characterized in that** the first adjusting gearwheel (301) is connected to a closing disc (304) on the housing side in a manner not liable to torsion and/or with angular play.

21. Cable-pull adjusting device according to Claim 20, **characterized in that** a shock absorber ring (306) is arranged between the first adjusting gearwheel and the closing disc (304).

22. Cable-pull adjusting device according to Claim 21, **characterized in that** the first adjusting gearwheel (301) has axial projections (310) which lie between radial projections (305) of the closing disc (304), shock absorber elements, preferably rubber blocks (307), of the shock absorber ring (306) being arranged between the radial projections (305) and the axial projections (310).

**23.** Cable-pull adjusting device according to Claim 22, **characterized in that** the shock absorber elements (307) bear in a sealing manner between the radial projections (305) and the axial projections (310).

**24.** Window lifter or sliding roof lifter having a cable-pull adjusting device according to one of Claims 16 to 23.


**Revendications**

**1.** Dispositif d'ajustement comprenant :

- une première roue dentée d'ajustement (1, 301) avec au moins une première zone de denture d'ajustement (5),
- une deuxième roue dentée d'ajustement (2, 302) avec au moins une deuxième zone de denture d'ajustement (6),
- un arbre d'entraînement (3) agencé de façon concentrique avec les roues dentées d'ajustement (1, 301 ; 2, 302), avec une denture extérieure d'arbre d'entraînement (14),
- et au moins deux satellites (10a-d) comportant des zones de denture satellitaire (15, 16, 60),
- dans lequel une première zone de denture d'ajustement (5) engrène avec une première zone de denture satellitaire (15) de chaque satellite (10a-d) et une deuxième zone de denture d'ajustement (6) engrène avec une deuxième zone de denture satellitaire (16) de chaque satellite (10a-d),
- dans lequel la denture d'arbre d'entraînement (14) engrène avec la deuxième zone de denture satellitaire (16, 60) de chaque satellite (10a-d),
- dans lequel les zones de denture d'ajustement (5, 6) sont réalisées sous la forme de dentures intérieures avec des nombres de dents différents entre eux,
- dans lequel la première denture intérieure (5) engrène avec une première zone de denture satellitaire (15) de chaque satellite (10a-d) et la deuxième denture intérieure (6) engrène avec une deuxième zone de denture satellitaire (16) de chaque satellite (10a-d) et la denture extérieure d'arbre (14) engrène avec l'une des zones de denture satellitaire (16, 60) de chaque satellite (10a-d) et la première denture intérieure (5) et la deuxième denture intérieure (6) présentent des nombres de dents différents (n, n-x), la première denture intérieure (5) et la deuxième denture intérieure (6) présentant des diamètres de pas de travail identiques, **caractérisé en ce que** les zones de denture satellitaire (15, 16) engrenant avec les première et deuxième zones de denture d'ajustement (5, 6) sont décalées axialement l'une par rapport à l'autre et présentent des nombres de dents différents (m), le rapport de transmission de la première zone d'ajustement (5) avec la première zone de denture satellitaire (15) étant différent du rapport de transmission de la deuxième zone de denture d'ajustement (6) avec la deuxième zone de denture satellitaire (16).

**2.** Dispositif d'ajustement selon la revendication 1, **caractérisé en ce que** les nombres de dents (n, n-1) des dentures intérieures (5, 6) et les nombres de dents (m) des première et deuxième zones de denture extérieure (15a-d, 16a-d) sont dans un rapport de 3:1 à 12:1, de préférence 5:1 à 8:1.

**3.** Dispositif d'ajustement selon la revendication 1 ou 2, **caractérisé en ce que** le nombre de dents (n) de la première denture intérieure (5) diffère de 1 du nombre de dents (n-1) de la deuxième denture intérieure (6) et/ou le nombre de dents de la première zone de denture extérieure (15) diffère de 1 du nombre de dents de la deuxième zone de denture extérieure (16).

**4.** Dispositif d'ajustement selon l'une des revendications précédentes, **caractérisé en ce qu'**une roue de guidage (119) est fixée sur l'arbre (3), laquelle présente des évidements (120, 121, 122) avec surfaces d'appui intérieures (150, 151, 152) pour recevoir de façon glissante les satellites (10a, b) et la roue dentée d'entraînement (4), et présente des surfaces d'appui radialement extérieures (123, 124) pour s'appuyer de façon glissante sur la première et/ou deuxième denture intérieure (5, 6).

**5.** Dispositif d'ajustement selon l'une des revendications précédentes, **caractérisé en ce qu'**une roue d'entraînement satellitaire (132) pour un ajustement grossier est disposée concentriquement à partir de l'arbre, et présente au moins deux broches (133, 134) pour venir en prise notamment rotative dans des trous centraux (135, 136) des satellites (10a, b), **en ce que** la roue d'entraînement satellitaire (132) peut être actionnée de l'extérieur du dispositif d'ajustement, de préférence par des méplats (137) d'un bossage axial (138), la roue d'entraînement satellitaire (132) étant supportée en rotation par l'intermédiaire d'une surface radialement extérieure (139) dans une roue dentée d'ajustement (1) ou dans un appui (140) d'une pièce en tôle matricée (127) qui est d'un seul tenant avec la roue dentée d'ajustement.

**6.** Dispositif d'ajustement selon l'une des revendications précédentes, **caractérisé en ce qu'**il est prévu sur l'arbre (3) une roue dentée d'actionnement (141) accessible de l'extérieur, utilisable par l'intermédiaire d'un mécanisme à rochet.

**7.** Dispositif d'ajustement selon l'une des revendications précédentes, **caractérisé en ce que** les roues dentées d'ajustement (1, 2, 301, 302) sont fabriquées sous la forme de pièces en tôle découpée, de pièces en tôle matricée, ou de zones de pièces en tôle matricée (127, 128).

**8.** Dispositif d'ajustement selon l'une des revendications précédentes, **caractérisé en ce qu'**au moins une roue dentée d'ajustement (1, 2, 301, 302) est réalisée en tant que zone extérieure d'une pièce en tôle matricée (127, 128) dont la zone intérieure (125, 126) est emboutie.

**9.** Articulation, en particulier articulation de robot, comprenant au moins trois parties d'articulation (233, 234, 235), une seconde partie d'articulation (234) pouvant tourner autour d'un premier axe (A1) par rapport à une première partie d'articulation (233) par l'intermédiaire d'un premier dispositif de réglage selon l'une des revendications précédentes, et une troisième partie d'articulation (235) pouvant tourner par rapport à la deuxième partie d'articulation (234) autour d'un deuxième axe (A2) différent du premier axe (A1) par l'intermédiaire d'un deuxième dispositif d'ajustement (231) selon l'une des revendications précédentes.

**10.** Articulation selon la revendication 9, **caractérisée en ce que** le deuxième axe (A2) est tourné par rapport au premier axe (A1), et s'étend de préférence perpendiculairement à celui-ci.

**11.** Articulation selon la revendication 9 ou 10, **caractérisée en ce que** la première partie d'articulation (233) et la deuxième partie d'articulation (234) sont reliées chacune à une roue dentée d'ajustement (1, 2) du premier dispositif d'ajustement (236) et/ou la deuxième partie d'articulation (234) et la troisième partie d'articulation (235) sont chacune reliées à une roue dentée d'ajustement (201, 202) du deuxième dispositif d'ajustement (231).

**12.** Articulation selon l'une des revendications 9 à 11, **caractérisée en ce qu'**un premier moteur d'entraînement (224) est agencé dans la première partie d'articulation (233) pour faire tourner la deuxième partie d'articulation (234) par rapport à la première partie d'articulation (233).

**13.** Articulation selon l'une des revendications 9 à 12, **caractérisée en ce qu'**un deuxième moteur d'entraînement (229) est agencé dans la deuxième partie d'articulation (234) pour faire tourner la troisième partie d'articulation (235) par rapport à la deuxième partie d'articulation (234).

**14.** Articulation selon l'une des revendications 9 à 13, **caractérisée en ce que** la deuxième partie d'articulation (234) et la troisième partie d'articulation (235) sont liées de façon rotative par l'intermédiaire du deuxième dispositif d'ajustement (231) et d'un troisième dispositif d'ajustement (232) selon l'une des revendications 1 à 6.

**15.** Articulation selon l'une des revendications 9 à 14, **caractérisée en ce que** le premier dispositif d'ajustement (236) est agencé dans la première partie d'articulation (233) et/ou le deuxième dispositif d'ajustement (231) et le cas échéant le troisième dispositif d'ajustement (232) sont agencés dans la deuxième partie d'articulation (234).

**16.** Dispositif d'ajustement de câble, pour ajuster un câble (326), en particulier pour un lève-vitre ou un toit ouvrant, comprenant un dispositif d'ajustement selon l'une des revendications 1 à 8, dans lequel la première roue dentée d'ajustement (301) peut être fixée du côté boîtier et la deuxième roue dentée d'ajustement (302) peut être fixée à un enrouleur de câble (21).

**17.** Dispositif d'ajustement de câble selon la revendication 16, **caractérisé en ce que** l'enrouleur de câble (321) est monté sur un pourtour radialement extérieur de la deuxième roue dentée d'ajustement (302).

**18.** Dispositif d'ajustement de câble selon la revendication 17, **caractérisé en ce que** plusieurs enroulements (325) disposés axialement côte à côte sont réalisés sur l'enrouleur de câble.

**19.** Dispositif d'ajustement de câble selon la revendication 17 ou 18, **caractérisé en ce qu'**il est prévu sur l'enrouleur de câble (321) une fente réceptrice (320) s'étendant au moins en partie en direction axiale pour recevoir une partie de câble, une partie de câble reçue étant immobilisée radialement par le câble posé sur les enroulements (325).

**20.** Dispositif d'ajustement de câble selon l'une des revendications 16 à 19, **caractérisé en ce que** la première roue dentée d'ajustement (301) est reliée à un disque de fermeture (304) côté boîtier, de manière souple en torsion et/ou avec un jeu angulaire.

**21.** Dispositif d'ajustement de câble selon la revendication 20, **caractérisé en ce qu'**un anneau amortisseur (306) est disposé entre la première roue dentée d'ajustement et le disque de fermeture (304).

**22.** Dispositif d'ajustement de câble selon la revendication 21, **caractérisé en ce que** la première roue dentée d'ajustement (301) présente des saillies axiales (310) qui s'étendent entre des saillies radiales (305) du disque de fermeture (304), des éléments amortisseurs, de préférence des blocs en caoutchouc (307), de l'anneau amortisseur (306), étant agencés entre les saillies radiales (305) et les saillies axiales (310).

**23.** Dispositif d'ajustement de câble selon la revendication 22, **caractérisé en ce que** les éléments amortisseurs (307) s'étendent de façon étanche entre les saillies radiales (305) et les saillies axiales (310).

**24.** Lève-vitre ou releveur de toit ouvrant comprenant un dispositif d'ajustement de câble selon l'une des revendications 16 à 23.

**Fig. 1**

Fig. 2c

Fig. 2a

Fig. 2b

Fig. 3

Fig. 4b

Fig. 4a

Fig. 4c

EP 1 244 880 B1

**Fig. 5**

**Fig. 6**

Fig. 7

**Fig. 8**

Fig. 9

Fig. 10

EP 1 244 880 B1

**Fig. 11**

**Fig. 12**

**Fig. 13**

**Fig. 14**

Fig. 15

Fig. 16

**Fig. 17**

130 131

4

EP 1 244 880 B1

Fig. 19

Fig. 18

Fig. 20

Fig. 21

Fig. 22

**Fig. 23**

EP 1 244 880 B1

**Fig. 24**

EP 1 244 880 B1

308

308

308

308

308

c

e

b

d

a

Fig. 25

Fig. 26

Fig. 27